(19)

**Europäisches Patentamt**

**European Patent Office**

**Office européen des brevets**

(11) **EP 4 686 109 A1**

(12) **EUROPEAN PATENT APPLICATION**
published in accordance with Art. 153(4) EPC

(43) Date of publication:
**28.01.2026 Bulletin 2026/05**

(21) Application number: **24784388.1**

(22) Date of filing: **03.04.2024**

(51) International Patent Classification (IPC):
**H04B 7/06** (2006.01)

(52) Cooperative Patent Classification (CPC):
**H04B 7/06; H04B 7/08**

(86) International application number:
**PCT/CN2024/085952**

(87) International publication number:
**WO 2024/208306 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310388735**

(71) Applicant: **Huawei Technologies Co., Ltd.
Shenzhen, Guangdong 518129 (CN)**

(72) Inventors:
- **YANG, Pei
  Shenzhen, Guangdong 518129 (CN)**
- **ZARIFI, Keyvan
  Shenzhen, Guangdong 518129 (CN)**
- **CHEN, Lei
  Shenzhen, Guangdong 518129 (CN)**
- **FAN, Bo
  Shenzhen, Guangdong 518129 (CN)**
- **YU, Zheng
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) A communication method and a communication apparatus are disclosed, related to the communication field. The method includes: A terminal sends data to a network device based on first information sent by the network device. The first information indicates a transmission mode and a plurality of precoding matrices corresponding to a plurality of antenna panels. The transmission mode is a first transmission mode or a second transmission mode. An antenna port set used by each antenna panel of the terminal in the first transmission mode or the second transmission mode is a part of an antenna port set used by the terminal in a third transmission mode. The first transmission mode is an SDM mode, the second transmission mode is an SFN mode, and the third transmission mode is an sTRP mode.

FIG. 5

## Description

This application claims priority to Chinese Patent Application No. 202310388735.5, filed with the China National Intellectual Property Administration on April 7, 2023 and entitled "COMMUNICATION METHOD AND COMMUNICATION APPARATUS", which is incorporated herein by reference in its entirety.

## TECHNICAL FIELD

This application relates to the communication field, and specifically, to a communication method and a communication apparatus.

## BACKGROUND

In a new radio access technology (new radio access technology, NR) of a 5th generation (5th generation, 5G) communication system, a beamforming (beamforming, BF) technology is used, so that directional power in a transmit direction can be increased, and a received signal to interference plus noise ratio (signal to interference plus noise ratio, SINR) can be improved, improving system performance. In an implementation process of the beamforming technology, an antenna panel (antenna panel) is a core component. A beam is sent or received via the antenna panel. During 5G NR deployment implementation, a directional beam is used. To implement widearea coverage, a base station (base station, BS) and a terminal are both deployed with a plurality of antenna panels.

Currently, there is a discussion about simultaneous uplink transmission of the plurality of antenna panels of the terminal. For example, it is assumed that the terminal has an antenna panel 1 and an antenna panel 2, where the antenna panel 1 has X1 antenna ports, and the antenna panel 2 has X2 antenna ports. In this case, when the antenna panel 1 transmits a sounding reference signal (sounding reference signal, SRS) or a physical uplink shared channel (physical uplink shared channel, PUSCH), X1 digital channels are required, and when the antenna panel 2 transmits the SRS or the PUSCH, X2 digital channels are required. However, because a capability of the terminal is limited (for example, because digital channel costs are high, the terminal cannot configure an independent digital channel for each antenna panel), a number of digital channels of the terminal may not be capable of meeting simultaneous transmission of all antenna ports of the plurality of antenna panels. In this scenario, how to implement simultaneous transmission of the plurality of antenna panels is a problem that needs to be considered.

## SUMMARY

This application provides a communication method and a communication apparatus, to implement simultaneous transmission of a plurality of antenna panels in a scenario in which a number of digital channels of a terminal cannot meet simultaneous transmission of all antenna ports of the plurality of antenna panels.

According to a first aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: receiving first information from a network device; and sending data to the network device based on the first information, where the first information indicates a transmission mode, k precoding matrices, and k numbers of streams in one-to-one correspondence with the k precoding matrices, and $k \geq 2$. The transmission mode is a first transmission mode or a second transmission mode. The k precoding matrices and the k numbers of streams are in one-to-one correspondence with k first antenna port sets used in the transmission mode. The first antenna port set is a part of a second antenna port set used by the terminal in a third transmission mode. In the first transmission mode, one transport block is simultaneously sent based on the k precoding matrices and the k numbers of streams, and different precoding matrices and numbers of streams correspond to different parts of the one transport block. In the second transmission mode, one transport block is simultaneously sent based on the k precoding matrices and the k numbers of streams, and different precoding matrices and numbers of streams correspond to a same part of the one transport block. In the third transmission mode, one transport block is sent based on one precoding matrix and one number of streams.

It should be understood that k is a number of antenna panels of the terminal. A total number of antenna ports included in the k first antenna port sets is less than or equal to a number of digital channels of the terminal.

For example, the first information may be downlink control information (downlink control information, DCI).

According to the communication method provided in this application, in the first transmission mode or the second transmission mode, the digital channel of the terminal is shared, or in other words, a plurality of antenna panels of the terminal share the digital channel. In other words, an antenna port used by each antenna panel of the terminal in the first transmission mode or the second transmission mode is a part of antenna ports used in the third transmission mode. Simultaneous transmission of the plurality of antenna panels may be implemented based on a precoding matrix associated with the antenna port used by each antenna panel and a number of streams corresponding to the precoding matrix.

In a possible implementation, before sending the data to the network device based on the first information, the method further includes: determining the k precoding matrices and the k numbers of streams based on a number of antenna ports included in the first antenna port set and the first information.

In a possible implementation, before the receiving the first information from the network device, the method further includes: sending second information to the network device, where the second information indicates one or more of the following: a number of antenna ports that the terminal is capable of using in the first transmission mode or the second transmission mode, an antenna port set that the terminal is capable of using in the first transmission mode or the second transmission mode, a type of a precoding matrix supported by the terminal in the first transmission mode or the second transmission mode, sharing of the digital channel of the terminal in the first transmission mode or the second transmission mode, a maximum number of streams that the terminal is capable of transmitting in the first transmission mode or the second transmission mode, a number of antenna ports used by the terminal in the third transmission mode, or a maximum number of streams that the terminal is capable of transmitting in the third transmission mode. The number of antenna ports that the terminal is capable of using in the first transmission mode or the second transmission mode is greater than or equal to the number of antenna ports included in the first antenna port set. The type of the precoding matrix is non-coherent or partial coherent.

According to this solution, the network device may learn, based on the first information reported by the terminal, whether the digital channel of the terminal is shared in the first transmission mode or the second transmission mode.

For example, the first information may be uplink control information (uplink control information, UCI), radio resource control (radio resource control, RRC) signaling, or a media access control control element (media access control control element, MAC CE).

In a possible implementation, the first information further indicates the k first antenna port sets.

According to this solution, the network device indicates, to the terminal, the k first antenna port sets used in the first transmission mode or the second transmission mode, to ensure performance of the terminal. For example, the network device may select an antenna port configuration with best performance for each antenna panel of the terminal, to maximize the performance of the terminal.

In a possible implementation, an SRS resource set indicator field in the first information indicates the k first antenna port sets.

According to this solution, the k first antenna port sets may be indicated without adding bits to current signaling, so that signaling overheads can be reduced.

In a possible implementation, before sending the data to the network device based on the first information, the method further includes: receiving third information from the network device, where the third information indicates k SRS resource sets, the SRS resource set includes a first SRS resource, and the first SRS resource is associated with the first antenna port set.

It should be understood that the k SRS resource sets are in one-to-one correspondence with the k antenna panels.

According to this solution, the network device may determine the k first antenna port sets, and the terminal does not need to report the k first antenna port sets, so that reporting overheads of the terminal can be reduced.

In a possible implementation, the second information indicates the type of the precoding matrix supported by the terminal in the first transmission mode or the second transmission mode. A number of rows of each of the k precoding matrices is equal to the number of antenna ports used by the terminal in the third transmission mode. A number of rows of non-zero elements in each precoding matrix is equal to the number of antenna ports included in the first antenna port set. This solution is compatible with the conventional technology, and is easy to implement.

In a possible implementation, Y=X/k, where Y is the number of antenna ports that the terminal is capable of using in the first transmission mode or the second transmission mode, and X is the number of antenna ports used by the terminal in the third transmission mode.

According to this solution, Y=X/k may be preconfigured, so that the terminal does not need to report a value of Y, and the network device can learn the value of Y.

In a possible implementation, the k first antenna port sets are specified in a protocol or set before delivery. According to this solution, implementation complexity of the terminal can be reduced, and signaling overheads required by the network device to indicate the k first antenna port sets to the terminal can be reduced.

According to a second aspect, a communication method is provided. The method may be performed by a network device, or may be performed by a component (for example, a processor, a chip, or a chip system) of a network device, or may be implemented by a logic module or software that can implement all or a part of functions of a network device.

The method includes: determining k precoding matrices and k numbers of streams in one-to-one correspondence with the k precoding matrices, where k≥2, the k precoding matrices and the k numbers of streams are in one-to-one correspondence with k first antenna port sets used in a first transmission mode or a second transmission mode, and the first antenna port set is a part of a second antenna port set used by a terminal in a third transmission mode; in the first transmission mode, one transport block is simultaneously sent based on the k precoding matrices and the k numbers of streams, and different precoding matrices and numbers of streams correspond to different parts of the one transport block; in the second transmission mode, one transport block is simultaneously sent based on the k precoding matrices and the k numbers of streams, and different precoding matrices and numbers of streams correspond to a same part of the one transport block; and in the third transmission mode, one transport block is sent based on one precoding matrix and one number of streams; and sending first information to the terminal, where the first information indicates a transmission mode, the k precoding matrices, and the k numbers of streams, and the transmission mode is the first transmission mode or the second transmission mode.

According to the communication method provided in this application, in the first transmission mode or the second transmission mode, a digital channel of the terminal is shared, or in other words, a plurality of antenna panels of the terminal share the digital channel. In other words, an antenna port used by each antenna panel of the terminal in the first transmission mode or the second transmission mode is a part of antenna ports used in the third transmission mode. Simultaneous transmission of the plurality of antenna panels may be implemented based on a precoding matrix associated with the antenna port used by each antenna panel and a number of streams corresponding to the precoding matrix.

In a possible implementation, before the determining the k precoding matrices and the k numbers of streams in one-to-one correspondence with the k precoding matrices, the method further includes: receiving second information from the terminal, where the second information indicates one or more of the following: a number of antenna ports that the terminal is capable of using in the first transmission mode or the second transmission mode, an antenna port set that the terminal is capable of using in the first transmission mode or the second transmission mode, a type of a precoding matrix supported by the terminal in the first transmission mode or the second transmission mode, sharing of the digital channel of the terminal in the first transmission mode or the second transmission mode, a maximum number of streams that the terminal is capable of transmitting in the first transmission mode or the second transmission mode, a number of antenna ports used by the terminal in the third transmission mode, or a maximum number of streams that the terminal is capable of transmitting in the third transmission mode. The number of antenna ports that the terminal is capable of using in the first transmission mode or the second transmission mode is greater than or equal to a number of antenna ports included in the first antenna port set. The type of the precoding matrix is non-coherent or partial coherent.

In a possible implementation, before the determining the k precoding matrices and the k numbers of streams in one-to-one correspondence with the k precoding matrices, the method further includes: determining, based on the second information, one or more of the following: sharing of the digital channel of the terminal in the first transmission mode or the second transmission mode, the k first antenna port sets, the number of antenna ports that the terminal is capable of using in the first transmission mode or the second transmission mode, or the type of the precoding matrix supported by the terminal in the first transmission mode or the second transmission mode.

In a possible implementation, the first information further indicates the k first antenna port sets.

In a possible implementation, an SRS resource set indicator field in the first information indicates the k first antenna port sets.

In a possible implementation, before the determining the k precoding matrices and the k numbers of streams in one-to-one correspondence with the k precoding matrices, the method further includes: sending third information to the terminal, where the third information indicates k SRS resource sets, the SRS resource set includes a first SRS resource, and the first SRS resource is associated with the first antenna port set.

In a possible implementation, a number of rows of each of the k precoding matrices is equal to the number of antenna ports included in the first antenna port set.

In a possible implementation, the second information indicates the type of the precoding matrix supported by the terminal in the first transmission mode or the second transmission mode. A number of rows of each of the k precoding matrices is equal to the number of antenna ports used by the terminal in the third transmission mode. A number of rows of non-zero elements in each precoding matrix is equal to the number of antenna ports included in the first antenna port set.

For beneficial effects of the solutions in the second aspect, refer to the beneficial effects of the corresponding solutions in the first aspect.

According to a third aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: receiving first information from a network device, and sending data to the network device based on the first information, where the first information indicates a transmission mode, and the transmission mode is one of a first transmission mode, a second transmission mode, and a third transmission mode. When the transmission mode is the first transmission mode or the second transmission mode, the first information further includes k fields, and the k fields indicate k first precoding matrices and k first numbers of streams in one-to-one correspondence with the k first precoding matrices. When the transmission mode is the third transmission mode, a part or all of bits obtained by concatenating the k fields or bits obtained by concatenating the k fields and a first field indicate a second precoding matrix and a second number of streams. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

According to this solution, precoding matrices and numbers of streams in different transmission modes can be indicated.

In a possible implementation, when a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. A bit length required to indicate the second precoding matrix and the second number of streams is determined by the number of antenna ports used in the third transmission mode and a maximum number of streams in the third transmission mode.

Specifically, the lengths of the k fields are $L_1$, $L_2$, ..., and $L_k$, and the bit length required to indicate the second precoding matrix and the second number of streams is L. In a case in which $L_1+L_2+...+L_k>L$, when the transmission mode is the third transmission mode, L bits among $L_1+L_2+...+L_k$ bits indicate the second precoding matrix and the second number of streams, and another bit is set to zero, reserved, skipped by the terminal, or ignored by the terminal. For example, first $(L_1+L_2+...+L_k)-L$ bits or last $(L_1+L_2+...+L_k)-L$ bits among the $L_1+L_2+...+L_k$ bits may be set to zero, reserved, skipped by the terminal, or ignored by the terminal. Optionally, a length of the first field is 0, or the first field is default. In a case in which $L_1+L_2+...+L_k=L$, $L_1+L_2+...+L_k$ bits indicate the second precoding matrix and the second number of streams. In a case in which $L_1+L_2+...+L_k<L$, L bits obtained by concatenating $L_1+L_2+...+L_k$ bits and the first field indicate the second precoding matrix and the second number of streams, and a length of the first field is $L-(L_1+L_2+...+L_k)$. In this scenario, when the transmission mode is the first transmission mode or the second transmission mode, the first field is set to zero, reserved, skipped by the terminal, or ignored by the terminal.

According to this solution, bit overheads can be reduced while precoding matrices and numbers of streams in different transmission modes are indicated.

In a possible implementation, before sending the data to the network device based on the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than the bit length required to indicate the second precoding matrix and the second number of streams.

For example, if one or more of the following conditions are satisfied, it is determined that the first condition is satisfied: The terminal explicitly or implicitly indicates, to the network device, that the digital channel of the terminal is not shared in the first transmission mode or the second transmission mode; the terminal reports, to the network device, that a number of antenna ports used by each antenna panel for transmission in the first transmission mode or the second transmission mode is less than a number of antenna ports used in the third transmission mode; or the terminal reports, to the network device, an antenna port used by each antenna panel in the first transmission mode or the second transmission mode.

According to a fourth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: generating first information, and sending the first information to a terminal, where the first information indicates a transmission mode, and the transmission mode is one of a first transmission mode, a second transmission mode, and a third transmission mode. When the transmission mode is the first transmission mode or the second transmission mode, the first information further includes k fields, and the k fields indicate k first precoding matrices and k first numbers of streams in one-to-one correspondence with the k first precoding matrices. When the transmission mode is the third transmission mode, a part or all of bits obtained by concatenating the k fields or bits obtained by concatenating the k fields and a first field indicate a second precoding matrix and a second number of streams. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

According to this solution, precoding matrices and numbers of streams in different transmission modes can be indicated.

In a possible implementation, when a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. A bit length required to indicate the second precoding matrix and the second number of streams is determined by the number of antenna ports used in the third transmission mode and a maximum number of streams in the third transmission mode. According to this solution, bit overheads can be reduced while precoding matrices and numbers of streams in different transmission modes are indicated.

In a possible implementation, before generating the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than the bit length required to indicate the second precoding matrix and the second number of streams.

According to a fifth aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: receiving first information from a network device, and sending data to the network device based on the first information, where the first information indicates a transmission mode, and the transmission mode is one of a first transmission mode, a second transmission mode, and a third transmission mode. The first information further includes k fields, and the k fields indicate k first precoding matrices and k first numbers of streams in one-to-one correspondence with the k first precoding matrices. When the transmission mode is the third transmission mode, the first information includes a first field, and the first field indicates a second precoding matrix and a second number of streams. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

When a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. A length of the first field is determined by the number of antenna ports used in the third transmission mode and a maximum number of streams in the third transmission mode. Optionally, a start location of the first field is aligned with start locations of the k fields, or an end location of the first field is aligned with end locations of the K fields.

Specifically, in a case in which $L_1+L_2+...+L_k>L$, when the transmission mode is the third transmission mode, the first field is L bits among $L_1+L_2+...+L_k$ bits, and another bit among the $L_1+L_2+...+L_k$ bits is set to zero, reserved, skipped by the terminal, or ignored by the terminal. For example, the first field may be first L bits or last L bits among the $L_1+L_2+...+L_k$ bits.

In a case in which $L_1+L_2+...+L_k=L$, $L_1+L_2+...+L_k$ bits are the first field.

In a case in which $L_1+L_2+...+L_k<L$, when the transmission mode is the first transmission mode or the second transmission mode, $L-(L_1+L_2+...+L_k)$ bits before or after $L_1+L_2+...+L_k$ bits are set to zero, reserved, skipped by the terminal, or ignored by the terminal, to be aligned with the first field.

According to this solution, bit overheads can be reduced while precoding matrices and numbers of streams in different transmission modes are indicated.

In a possible implementation, before sending the data to the network device based on the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than a bit length required to indicate the second precoding matrix and the second number of streams.

For example, if one or more of the following conditions are satisfied, it is determined that the first condition is satisfied: The terminal explicitly or implicitly indicates, to the network device, that the digital channel of the terminal is not shared in the first transmission mode or the second transmission mode; the terminal reports, to the network device, that a number of antenna ports used by each antenna panel for transmission in the first transmission mode or the second transmission mode is less than a number of antenna ports used in the third transmission mode; or the terminal reports, to the network device, an antenna port used by each antenna panel in the first transmission mode or the second transmission mode.

According to a sixth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: generating first information, and sending the first information to a terminal, where the first information indicates a transmission mode, and the transmission mode is one of a first transmission mode, a second transmission mode, and a third transmission mode. The first information further includes k fields, and the k fields indicate k first precoding matrices and k first numbers of streams in one-to-one correspondence with the k first precoding matrices. When the transmission mode is the third transmission mode, the first information includes a first field, and the first field indicates a second precoding matrix and a second number of streams. Optionally, a start location of the first field is aligned with start locations of the K fields, or an end location of the first field is aligned with end locations of the k fields. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

When a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. A length of the first field is determined by the number of antenna ports used in the third transmission mode and a maximum number of streams in the third transmission mode.

In a possible implementation, before generating the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than a bit length required to indicate the second precoding matrix and the second number of streams.

According to a seventh aspect, a communication method is provided. The method may be performed by a terminal, or may be performed by a component (for example, a processor, a chip, or a chip system) of a terminal, or may be implemented by a logic module or software that can implement all or a part of functions of a terminal.

The method includes: receiving first information from a network device, and sending data to the network device based on the first information, where the first information indicates a transmission mode, and the transmission mode is one of a first transmission mode, a second transmission mode, and a third transmission mode. The first information further includes W bits indicating a precoding matrix and a number of streams. W is a larger one of L1+L2+...+Lk and L. L1+L2+...+Lk is a sum of numbers of bits required to indicate, in the first transmission mode or the second transmission mode, k first precoding matrices and first numbers of streams in one-to-one correspondence with the k first precoding matrices. L is a number of bits required to indicate a second precoding matrix and a second number of streams in the third transmission mode. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

When a digital channel of the terminal is shared in the first transmission mode or the second transmission mode, a length of each of k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of k fields is determined by a number of antenna ports used by the terminal (that is, a number of antenna ports used by the terminal in the third transmission mode) and a maximum number of streams in the first transmission mode or the second transmission mode, or a length of each of k fields is determined by a number of antenna ports that the terminal is capable of using in the first transmission mode or the second transmission mode or a number of antenna ports of the terminal, and a maximum number of streams in the first transmission mode or the second transmission mode. L is determined by the number of antenna ports used in the third transmission mode and a maximum number of streams in the third transmission mode.

According to this solution, bit overheads can be reduced while precoding matrices and numbers of streams in different transmission modes are indicated.

In a possible implementation, before sending the data to the network device based on the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than a bit length required to indicate the second precoding matrix and the second number of streams.

For example, if one or more of the following conditions are satisfied, it is determined that the first condition is satisfied: The terminal explicitly or implicitly indicates, to the network device, that the digital channel of the terminal is not shared in the first transmission mode or the second transmission mode; the terminal reports, to the network device, that a number of antenna ports used by each antenna panel for transmission in the first transmission mode or the second transmission mode is less than a number of antenna ports used in the third transmission mode; or the terminal reports, to the network device, an antenna port used by each antenna panel in the first transmission mode or the second transmission mode.

According to an eighth aspect, a communication method is provided. The method may be performed by a network device, or may be performed by a component (for example, a processor, a chip, or a chip system) of a network device, or may be implemented by a logic module or software that can implement all or a part of functions of a network device.

The method includes: generating first information, and sending the first information to a terminal, where the first information indicates a transmission mode, and the transmission mode is one of a first transmission mode, a second transmission mode, and a third transmission mode. The first information further includes W bits indicating a precoding matrix and a number of streams. W is a larger one of L1+L2+...+Lk and L. L1+L2+...+Lk is a sum of numbers of bits required to indicate, in the first transmission mode or the second transmission mode, k first precoding matrices and first numbers of streams in one-to-one correspondence with the k first precoding matrices. L is a number of bits required to indicate a second precoding matrix and a second number of streams in the third transmission mode. In the first transmission mode, one transport block is simultaneously sent based on the k first precoding matrices and the k first numbers of streams, and different precoding matrices and numbers of streams correspond to different parts of the one transport block. In the second transmission mode, one transport block is simultaneously sent based on the k first precoding matrices and the k first numbers of streams, and different precoding matrices and numbers of streams correspond to a same part of the one transport block. In the third transmission mode, one transport block is sent based on the second precoding matrix and the second number of streams.

When a digital channel of the terminal is shared in the first transmission mode or the second transmission mode, a length of each of k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of k fields is determined by a number of antenna ports used by the terminal (that is, a number of antenna ports used by the terminal in the third transmission mode) and a maximum number of streams in the first transmission mode or the second transmission mode, or a length of each of k fields is determined by a number of antenna ports that the terminal is capable of using in the first transmission mode or the second transmission mode or a number of antenna ports of the terminal, and a maximum number of streams in the first transmission mode or the second transmission mode. L is determined by the number of antenna ports used in the third transmission mode and a maximum number of streams in the third transmission mode.

In a possible implementation, before generating the first information, the method further includes: determining that a first condition is satisfied, where the first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than a bit length required to indicate the second precoding matrix and the second number of streams.

According to a ninth aspect, a communication apparatus is provided, including a module or a unit configured to perform the method in any one of the first aspect or the possible implementations of the first aspect, or including a module or a unit configured to perform the method in any one of the third aspect or the possible implementations of the third aspect, or including a module or a unit configured to perform the method in any one of the fifth aspect or the possible implementations of the fifth aspect, or including a module or a unit configured to perform the method in any one of the seventh aspect or the possible implementations of the seventh aspect.

According to a tenth aspect, a communication apparatus is provided, including a module or a unit configured to perform the method in any one of the second aspect or the possible implementations of the second aspect, or including a module or a unit configured to perform the method in any one of the fourth aspect or the possible implementations of the fourth aspect, or including a module or a unit configured to perform the method in any one of the sixth aspect or the possible implementations of the sixth aspect, or including a module or a unit configured to perform the method in any one of the eighth aspect or the possible implementations of the eighth aspect.

According to an eleventh aspect, a communication apparatus is provided, including a processor. The processor is coupled to a memory. The memory is configured to store a computer program or instructions. The processor is configured to execute the computer program or the instructions stored in the memory, to implement the method in any one of the first aspect or the possible implementations of the first aspect, or implement the method in any one of the third aspect or the possible implementations of the third aspect, or implement the method in any one of the fifth aspect or the possible implementations of the fifth aspect, or implement the method in any one of the seventh aspect or the possible implementations of the seventh aspect.

In a possible implementation, the apparatus further includes the memory coupled to the processor.

In a possible implementation, there is one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a terminal. For example, the communication interface may be a transceiver or an input/output interface.

In another implementation, the apparatus is a chip in a terminal. For example, the communication interface may be an input/output interface.

According to a twelfth aspect, a communication apparatus is provided, including a processor. The processor is coupled to a memory. The memory is configured to store a computer program or instructions. The processor is configured to execute the computer program or the instructions stored in the memory, to implement the method in any one of the second aspect or the possible implementations of the second aspect, or implement the method in any one of the fourth aspect or the possible implementations of the fourth aspect, or implement the method in any one of the sixth aspect or the possible implementations of the sixth aspect, or implement the method in any one of the eighth aspect or the possible implementations of the eighth aspect.

In a possible implementation, the apparatus further includes the memory coupled to the processor.

In a possible implementation, there is one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a network device. For example, the communication interface may be a transceiver or an input/output interface.

In another implementation, the apparatus is a chip in a network device. For example, the communication interface may be an input/output interface.

According to a thirteenth aspect, a processor is provided, including an input circuit, an output circuit, and a processing circuit. The processing circuit is configured to: receive a signal via the input circuit, and transmit a signal via the output circuit, so that the processor performs the method in any one of the foregoing aspects or any one of the possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and various circuits are not limited in this application.

According to a fourteenth aspect, a communication system is provided, including at least one of the communication apparatus provided in the ninth aspect and the communication apparatus provided in the tenth aspect, or including at least one of the communication apparatus provided in the eleventh aspect and the communication apparatus provided in the twelfth aspect.

According to a fifteenth aspect, a computer program product is provided. The computer program product includes a computer program (which may also be referred to as code or instructions). When the computer program is run, a computer is enabled to perform the method in any one of the foregoing aspects or any one of the possible implementations of any one of the foregoing aspects.

According to a sixteenth aspect, a computer-readable storage medium is provided. The computer-readable storage medium stores a computer program (which may also be referred to as code or instructions). When the computer program is run on a computer, the computer is enabled to perform the method in any one of the foregoing aspects or any one of the possible implementations of any one of the foregoing aspects.

According to a seventeenth aspect, a chip is provided, including a processor, configured to invoke a computer program from a memory and run the computer program, so that a communication apparatus on which the chip is installed performs the method in any one of the foregoing aspects or any one of the possible implementations of any one of the foregoing aspects.

According to an eighteenth aspect, a communication apparatus is provided. The communication apparatus includes an interface and a processor. The interface is configured to send and/or receive a signal, so that the processor performs the method in any one of the foregoing aspects or any one of the possible implementations of any one of the foregoing aspects.

## BRIEF DESCRIPTION OF DRAWINGS

FIG. 1 is a diagram of two typical antenna panels according to an embodiment of this application;
FIG. 2 is a diagram of an example of an application scenario according to an embodiment of this application;
FIG. 3 is a diagram of a structure of a terminal according to an embodiment of this application;
FIG. 4 is a diagram of a structure of a terminal according to an embodiment of this application;
FIG. 5 is a schematic flowchart of a communication method according to an embodiment of this application;
FIG. 6 is a schematic flowchart of a specific example of a communication method according to an embodiment of this application;
FIG. 7 is a schematic flowchart of a specific example of a communication method according to an embodiment of this application;
FIG. 8 is a schematic flowchart of a specific example of a communication method according to an embodiment of this application;
FIG. 9 is a schematic flowchart of a specific example of a communication method according to an embodiment of this application;
FIG. 10 is a schematic flowchart of another communication method according to an embodiment of this application;
FIG. 11 is a diagram of a format of first information according to an embodiment of this application;
FIG. 12 is a diagram of a format of first information according to an embodiment of this application;
FIG. 13 is a diagram of a format of first information according to an embodiment of this application;
FIG. 14 is a diagram of a format of first information according to an embodiment of this application;
FIG. 15 is a schematic block diagram of a communication apparatus according to an embodiment of this application;
FIG. 16 is a schematic block diagram of another communication apparatus according to an embodiment of this application;
FIG. 17 is a diagram of a structure of a terminal according to an embodiment of this application; and
FIG. 18 is a diagram of a structure of a network device according to an embodiment of this application.

## DESCRIPTION OF EMBODIMENTS

In the descriptions of this application, unless otherwise specified, "/" indicates that associated objects are in an "or" relationship. For example, A/B may represent A or B. The term "and/or" in this specification describes only an association relationship for describing the associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a number and an execution sequence, and the terms such as "first" and "second" do not indicate a definite difference. In this application, descriptions similar to "in a case of...", "if...", "when...", "it is assumed that...", and the like may be used interchangeably. That A and B are associated may also be described as that A and B correspond, that A is associated with B may also be described as that A is associated with B, and the like.

A terminal in embodiments of this application may be (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a large screen, an in-vehicle device, a wearable device, a terminal in a 5G network, a terminal in a future evolved public land mobile network (public land mobile network, PLMN), or the like. This is not limited in embodiments of this application. In this application, the foregoing terminal and a chip or a chip system that may be disposed on the foregoing terminal are collectively referred to as a terminal.

A network device in embodiments of this application may be a device configured to communicate with the terminal. For example, the network device may be a base station (base station), an evolved base station (evolved NodeB, eNodeB), a transmission reception point (transmission reception point, TRP), a next generation base station (next generation NodeB, gNB) in a 5G mobile communication system, a base station in a future mobile communication system, or an access point (access point, AP) in a Wi-Fi system. For another example, the network device may alternatively be a module or a unit that completes a part of functions of a base station, for example, may be a central unit (central unit, CU) or a distributed unit (distributed unit, DU). For another example, the network device may alternatively be a radio controller in a cloud radio access network (cloud radio access network, CRAN) scenario, a relay station, an access point, an in-vehicle device, a wearable device, or an access network device in another future evolved communication system. A specific technology and a specific device form that are used by the network device are not limited in this application. In this application, the foregoing network device and a chip or a chip system that may be disposed on the foregoing network device are collectively referred to as a network device.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke the program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk drive, a floppy disk, or a magnetic tape), an optical disc (for example, a compact disc (compact disc, CD), and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain, and/or carry instructions and/or data.

The technical solutions in embodiments of this application may be applied to various communication systems, for example, a long term evolution (long term evolution, LTE) system, a 5th generation (5th Generation, 5G) mobile communication system, new radio (New Radio, NR), and another mobile communication system (for example, a 6G mobile communication system) that may appear in the future.

This application is applicable to an uplink transmission scenario, where a terminal performing uplink transmission is deployed with a plurality of antenna panels.

Generally, a mobile terminal integrates two or three antenna panels, while a fixed terminal, for example, customer premises equipment (customer premises equipment, CPE)/fixed wireless access (fixed wireless access, FWA), may integrate more antenna panels, for example, four or eight.

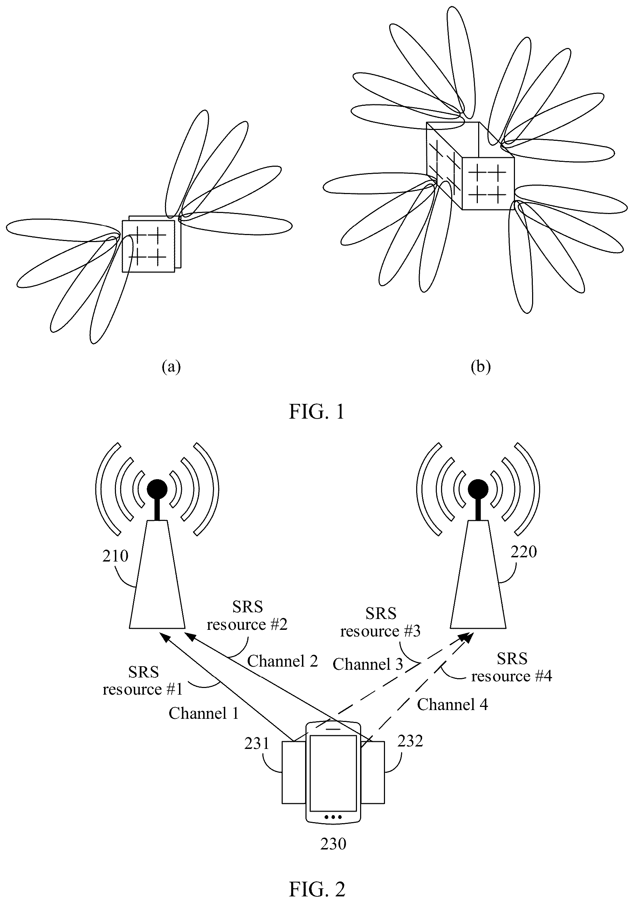

For example, FIG. 1 is a diagram of two typical antenna panels. (a) in FIG. 1 shows a terminal integrating two antenna panels, and (b) in FIG. 1 shows a terminal integrating four antenna panels. Each antenna panel supports four antenna ports, that is, may send four beams.

In this application, the antenna panel is sometimes referred to as a panel.

The antenna panel may be an antenna set. Correspondingly, the antenna panel in embodiments of this application may alternatively be the "antenna set".

Optionally, the antenna set may be an antenna set for which transmit power can be controlled independently or separately. The antenna set may alternatively be an antenna set capable of independent or separate timing. The antenna set may alternatively be an antenna set for which modulation and encoding are performed independently or separately.

In an implementation, the antenna panel in embodiments of this application may be a capability value set in a capability value set list of the terminal. Correspondingly, the antenna panel in embodiments of this application may alternatively be the "capability value set". The capability value set may include a number of channel sounding reference signal (sounding reference signal, SRS) ports, a maximum number of SRS ports, a number of layers sent in uplink (uplink, UL), a maximum number of layers sent in UL, a coherence type of an antenna port, and the like.

Optionally, a correspondence exists between the capability value set and a synchronization signal and physical broadcast channel block (synchronization signal and physical broadcast channel block, SSB) resource indicator (SSB resource indicator, SSBRI), or a correspondence exists between the capability value set and a channel state information reference signal (channel state information reference signal, CSI-RS) resource indicator (CRI-RS resource indicator, CRI). Therefore, an antenna panel may also refer to an SSBRI or CRI. Further, correspondingly, the antenna panel in embodiments of this application may alternatively be the "SSBRI" or "CRI".

For example, the correspondence between the capability value set and the SSBRI or the correspondence between the capability value set and the CRI may be determined by the terminal. The terminal may report the correspondence between the capability value set and the SSBRI or the correspondence between the capability value set and the CRI to a network device in beam reporting. Alternatively, the terminal may report the capability value set, the SSBRI, or the CRI to a network device.

In an implementation, the antenna panel in embodiments of this application may be an SRS resource set (SRS resource set) or an SRS port set. Correspondingly, the antenna panel in this application may also be referred to as the "SRS resource set" or the "SRS port set".

Optionally, in embodiments of this application, a definition of the antenna panel may dynamically change. For example, the antenna panel includes a capability value set of four SRS ports at a moment 1, and the antenna panel may include a capability set of two SRS ports at a moment 2 after the moment 1.

The terminal needs to perform precoding when performing uplink transmission. Precoding for uplink transmission supports two types of transmission modes: a codebook (codebook, CB)-based uplink transmission mode and a non-codebook (non-codebook, NCB)-based uplink transmission mode.

1. CB-based uplink transmission

The network device may configure a plurality of SRS resources (resources) for the terminal, and the terminal sends the plurality of SRS resources to the network device. Each SRS resource corresponds to one uplink channel. The network device learns different uplink channel quality using the received SRS resources. The network device selects an appropriate SRS resource based on the uplink channel quality, and determines a precoding matrix and a number of layers. Then, the network device indicates the selected SRS resource and the determined precoding matrix and number of layers to the terminal using an SRS resource indicator (SRS resource indicator, SRI) field and a precoding information and number of layers (Precoding information and number of layers) field in downlink control information (downlink control information, DCI). The SRI field indicates an SRS resource index (index), and the SRS resource is a specific SRS resource selected by the network device from the plurality of SRS resources. Each SRS resource may be configured (or associated) with one or more SRS ports, where a number of SRS ports may be configured using RRC. The precoding information and number of layers field indicates a transmission rank indicator (Transmission rank indicator, TRI) and a transmission precoding matrix indicator (Transmission precoding matrix indicator, TPMI). The TRI indicates a rank, that is, the number of layers. The TPMI indicates one of a plurality of precoding matrices corresponding to the rank indicated by the TRI.

After receiving the DCI, the terminal may first determine a TPMI table based on the number of SRS ports of the SRS resource indicated by the SRI field and an uplink maximum rank (maxRank) and a power mode (ul-FullPower-Transmission) that are indicated by RRC. For example, Table 1 shown below may be determined. Then, the terminal may determine a row in the table based on the precoding information and number of layers field, where the row includes a TRI and a TPMI. For example, if the precoding information and number of layers field is 001001, that is, a value is 9, and a codebook subset (codebookSubset) is fullyAndPartialAndNonCoherent, it may be determined by viewing a first column and a second column in Table 1 that the TRI is 2 (that is, the number of layers is 2) and the TPMI is 5. Then, a table may be determined based on the number of SRS ports and the TRI. For example, the following Table 2 may be determined. Then, the terminal may determine a precoding matrix, that is, a precoding matrix corresponding to TPMI=5, in the table based on the TPMI, and perform uplink transmission based on the precoding matrix. It should be understood that the first column in Table 1 is an index to which the precoding information and number of layers field is mapped, that is, the first column is an index or a decimal number represented by a binary number in the precoding information and number of layers field.

Table 1

| Value | Codebook subset=fully coherent and partial coherent and non-coherent | Value | Codebook subset=partial coherent and non-coherent | Value | Codebook subset=non-coherent |
|---|---|---|---|---|---|
| 0 | One layer: TPMI=0 | 0 | One layer: TPMI=0 | 0 | One layer: TPMI=0 |
| 1 | One layer: TPMI=1 | 1 | One layer: TPMI=1 | 1 | One layer: TPMI=1 |
| ... | ... | ... | ... | ... | ... |
| 3 | One layer: TPMI=3 | 3 | One layer: TPMI=3 | 3 | One layer: TPMI=3 |
| 4 | Two layers: TPMI=0 | 4 | Two layers: TPMI=0 | 4 | Two layers: TPMI=0 |
| ... | ... | ... | ... | ... | ... |
| 9 | Two layers: TPMI=5 | 9 | Two layers: TPMI=5 | 9 | Two layers: TPMI=5 |
| 10 | Three layers: TPMI=0 | 10 | Three layers: TPMI=0 | 10 | Three layers: TPMI=0 |
| 11 | Four layers: TPMI=0 | 11 | Four layers: TPMI=0 | 11 | Four layers: TPMI=0 |
| 12 | One layer: TPMI=4 | 12 | One layer: TPMI=4 | 12 to 15 | Reserved |
| ... | ... | ... | ... | | |
| 19 | One layer: TPMI=11 | 19 | One layer: TPMI=11 | | |
| 20 | Two layers: TPMI=6 | 20 | Two layers: TPMI=6 | | |
| ... | ... | ... | ... | | |
| 27 | Two layers: TPMI=13 | 27 | Two layers: TPMI=13 | | |
| 28 | Three layers: TPMI=1 | 28 | Three layers: TPMI=1 | | |
| 29 | Three layers: TPMI=2 | 29 | Three layers: TPMI=2 | | |
| 30 | Four layers: TPMI=1 | 30 | Four layers: TPMI=1 | | |
| 31 | Four layers: TPMI=2 | 31 | Four layers: TPMI=2 | | |
| 32 | One layer: TPMI=12 | | | | |
| ... | ... | | | | |
| 47 | One layer: TPMI=27 | | | | |
| 48 | Two layers: TPMI=14 | | | | |
| ... | ... | | | | |

(continued)

| Value | Codebook subset=fully coherent and partial coherent and non-coherent | Value | Codebook subset=partial coherent and non-coherent | Value | Codebook subset=non-coherent |
|---|---|---|---|---|---|
| 55 | Two layers: TPMI=21 | | | | |
| 56 | Three layers: TPMI=3 | | | | |
| ... | ... | | | | |
| 59 | Three layers: TPMI=6 | | | | |
| 60 | Four layers: TPMI=3 | | | | |
| 61 | Four layers: TPMI=4 | | | | |
| 62 and 63 | Reserved | | | | |

Table 2 Precoding matrix for four antenna ports with a number of layers being 2

| TPMI index | Precoding matrix $W$ (sorted from left to right in ascending order of TPMI indexes) | | | |
|---|---|---|---|---|
| 0 to 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 to 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 to 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 to 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 to 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |

(continued)

| TPMI index | Precoding matrix $W$ (sorted from left to right in ascending order of TPMI indexes) | | | |
|---|---|---|---|---|
| 20 to 21 | $\dfrac{1}{2\sqrt{2}}\begin{bmatrix} 1 & 1 \\ -j & -j \\ 1 & -1 \\ -j & j \end{bmatrix}$ | $\dfrac{1}{2\sqrt{2}}\begin{bmatrix} 1 & 1 \\ -j & -j \\ j & -j \\ 1 & -1 \end{bmatrix}$ | - | - |

2. NCB-based uplink transmission mode

For the NCB-based uplink transmission mode, a 3GPP NR R16 protocol enables an SRS resource indicator (SRS resource indicator, SRI) when a number of transmit antennas of the terminal is 2 or 4 and a maximum number of layers of the terminal is 4. Specifically, the network device sends a channel state information reference signal (channel state information reference signal, CSI-RS) to the terminal, and the terminal may estimate downlink channel information based on the CSI-RS sent by the network device, and obtain uplink channel information based on uplink and downlink channel reciprocity. The terminal calculates four 4*1 candidate precoding matrices based on the estimated uplink channel information, loads first $N_{SRS}$ candidate precoding matrices on $N_{SRS}$ SRS resources, and sends the SRS resources to the network device. According to the current protocol, a maximum number of SRS resources configured for the NCB-based uplink transmission mode is 4, a value of $N_{SRS}$ may be 2, 3, or 4, and each SRS resource has one antenna port. The network device receives the SRS sent by the terminal, estimates candidate precoding matrices, then determines precoding matrices to be used, and indicates, to the terminal using an SRI field in DCI, indexes of SRS resources corresponding to the selected precoding matrices. After receiving the DCI, the terminal locates a table indicated by an SRI and a corresponding column based on higher-layer parameters $N_{SRS}$ and $L_{max}$ indicated by RRC. $N_{SRS}$ is a number of SRS resources used to upload the candidate precoding matrices in NCB transmission, which is specified by the network device, and is a maximum number of uplink layers in NCB transmission, which is specified by the network device. For example, when $N_{SRS}=4$, a sixth column in the following Table 3 is located. Finally, the terminal determines a corresponding row based on a value of the SRI field, to determine an antenna port corresponding to the row and further determine a precoding matrix and a number of layers. Then, the terminal may perform uplink transmission.

Table 3

| Bit-field mapped value | SRI(s), $N_{SRS} = 2$ | Bit-field mapped value | SRI(s), $N_{SRS} = 3$ | Bit-field mapped value | SRI(s), $N_{SRS} = 4$ |
|---|---|---|---|---|---|
| 0 | 0 | 0 | 0 | 0 | 0 |
| 1 | 1 | 1 | 1 | 1 | 1 |
| 2 | 0 and 1 | 2 | 2 | 2 | 2 |
| 3 | Reserved | 3 | 0 and 1 | 3 | 3 |
|  |  | 4 | 0 and 2 | 4 | 0 and 1 |
|  |  | 5 | 1 and 2 | 5 | 0 and 2 |
|  |  | 6 | 0, 1, and 2 | 6 | 0 and 3 |
|  |  | 7 | Reserved | 7 | 1 and 2 |
|  |  |  |  | 8 | 1 and 3 |
|  |  |  |  | 9 | 2 and 3 |
|  |  |  |  | 10 | 0, 1, and 2 |
|  |  |  |  | 11 | 0, 1, and 3 |
|  |  |  |  | 12 | 0, 2, and 3 |
|  |  |  |  | 13 | 1, 2, and 3 |
|  |  |  |  | 14 | 0, 1, 2, and 3 |

(continued)

| Bit-field mapped value | SRI(s), $N_{SRS} = 2$ | Bit-field mapped value | SRI(s), $N_{SRS} = 3$ | Bit-field mapped value | SRI(s), $N_{SRS} = 4$ |
|---|---|---|---|---|---|
| | | | | 15 | Reserved |

In Table 3, a first column, a third column, and a fifth column are values of the SRI field, and a second column, a fourth column, and the sixth column represent SRS resource combinations corresponding to $N_{SRS} = 2$, $N_{SRS} = 3$, and $N_{SRS} = 4$.

It should be understood that in this application, the number of layers and a number of spatial layers, a rank (rank), a number of streams, or a number of transport streams are interchangeable. In this application, the "field" and the "field" are interchangeable. In addition, in the descriptions of this application, a value of a field is a decimal number represented by a binary bit filled in the field, and the decimal number may also be referred to as an index.

FIG. 2 is a diagram of an example of an application scenario according to an embodiment of this application. As shown in FIG. 2, the application scenario includes a network device 210, a network device 220, and a terminal 230. The terminal 230 includes an antenna panel 231 and an antenna panel 232. In an optional implementation, in the application scenario shown in FIG. 2, the network device 210 and the network device 220 may be two base stations. The network device 210 and the network device 220 may alternatively be two transmission reception points TRPs of one base station.

It should be understood that the application scenario may include a plurality of terminals and a plurality of network devices. The terminal 230 may include a plurality of antenna panels. This is not limited in this embodiment of this application.

The following describes three transmission modes (a first transmission mode, a second transmission mode, and a third transmission mode) in this application with reference to FIG. 2. It should be understood that the transmission mode in embodiments of this application may alternatively be descriptions such as a mode, a transmission manner, a transmission rule, a mapping manner, a mapping rule, and a resource determining manner.

(1) First transmission mode

In the first transmission mode, one transport block is simultaneously sent based on a plurality of precoding matrices and a plurality of numbers of layers in one-to-one correspondence with the plurality of precoding matrices, and different precoding matrices and numbers of layers are associated with different parts of the transport block. For example, in the first transmission mode, one transport block is simultaneously sent based on two precoding matrices and numbers of layers respectively corresponding to the two precoding matrices, and different precoding matrices and numbers of layers are associated with different parts of the transport block.

For example, in this application, the precoding matrix and the number of layers corresponding to the precoding matrix may be indicated using a precoding information and number of layers (Precoding information and number of layers) field or a sounding reference signal resource indicator (SRS resource indicator, SRI) field.

Precoding information and a number of layers may also be referred to as "precoding information and a number of layers/number of streams", "precoding information and a number of streams", or the like. In addition, the precoding information and the number of layers may also be understood as a transmission precoding matrix indicator (Transmission Precoding Matrix Indicator, TPMI). For example, the precoding information and the number of layers, the precoding information and number of layers field, the TPMI, and a TPMI field may be understood as same expressions. In a CB-based uplink transmission mode, the network device may indicate, using a TPMI, a precoding matrix and a number of layers that are used by the terminal for physical uplink shared channel (physical uplink shared channel, PUSCH) transmission.

The SRI field may also be referred to as an SRI. In an NCB-based uplink transmission mode, the SRI indicates an SRS resource selected by the network device, and the terminal may determine, based on the received SRI, the SRS resource selected by the network device. That the terminal determines the SRS resource selected by the network device is equivalent to that the precoding matrix and the number of layers are determined. The terminal may send data or a PUSCH in a beam direction in which the SRS resource is previously sent. Sending the PUSCH herein may also be understood as sending data on the PUSCH.

A person skilled in the art may understand that the plurality of precoding matrices and the plurality of numbers of layers in one-to-one correspondence with the plurality of precoding matrices are in one-to-one correspondence with the plurality of antenna panels. For example, "a plurality of' is "two", and that two precoding matrices and numbers of layers respectively corresponding to the two precoding matrices are in one-to-one correspondence with two antenna panels means that one precoding matrix and the number of layers corresponding to the precoding matrix are used by one antenna panel for transmission, and the other precoding matrix and the number of layers corresponding to the precoding matrix are used by the other antenna panel for transmission.

Therefore, the first transmission mode may alternatively be understood as follows: The first transmission mode is a transmission manner in which one transport block is simultaneously sent via the plurality of antenna panels on the terminal, where different antenna panels send different parts of the transport block. Alternatively, the first transmission mode is a transmission manner in which one transport block is simultaneously sent via the plurality of antenna panels, where different antenna panels send different parts of the transport block.

In the first transmission mode, the terminal may send the transport block to a same network device or to different network devices via the plurality of antenna panels. The following uses the application scenario shown in FIG. 2 as an example to describe uplink transmission performed by the antenna panel 231 and the antenna panel 232 of the terminal in the first transmission mode.

For example, the antenna panel 231 and the antenna panel 232 may simultaneously send one transport block, where the antenna panel 231 and the antenna panel 232 send different parts of the one transport block.

For another example, the terminal 230 sends one part of a transport block to the network device 210 via the antenna panel 231, and simultaneously sends the other part of the transport block to the network device 210 via the antenna panel 232.

For another example, the terminal 230 sends one part of a transport block to the network device 210 via the antenna panel 231, and simultaneously sends the other part of the transport block to the network device 220 via the antenna panel 232.

In a possible implementation, the antenna panel in this application corresponds to one or more of the following items: a transmission configuration indicator state (transmission configuration indicator state, TCI state), a quasi-co-location (quasi-co-location, QCL) relationship, a beam, a precoding information and number of layers field, a TPMI field, an SRI field, an SRS resource set (SRS resource set), or an SRS resource (SRS resource). The antenna panel in this application may alternatively be one or more of the foregoing items.

For ease of understanding, one or more of the foregoing items are referred to as information #A.

That the antenna panel corresponds to the information #A may also be described as follows: The antenna panel is associated with the information #A, or has an association relationship with the information #A.

It may be understood that the plurality of antenna panels of the terminal may be in one-to-one correspondence with a plurality of pieces of information #A. To be specific, the plurality of antenna panels of the terminal are in one-to-one correspondence with one or more of the following: a plurality of TCI states, a plurality of QCL relationships, a plurality of beams, a plurality of precoding information and number of layers fields, a plurality of TPMI fields, a plurality of SRI fields, a plurality of SRS resource sets, or a plurality of SRS resources.

Correspondingly, the first transmission mode may alternatively be understood as a transmission mode in which the terminal sends different layers of one piece of data (or a same piece of data) at a same time, at a same moment, in a same time period, or simultaneously based on (or using) the plurality of pieces of information #A. For example, a layer 0 of a piece of data is sent using a first TPMI, and a layer 1 of the data is sent using a second TPMI.

Optionally, the plurality of pieces of information #A are associated with a plurality of code division multiplexing groups (code division multiplexing, CDM groups).

Optionally, each SRS resource set, each TPMI field, or each SRI field is associated with a maximum value (max rank) of one number of streams.

Optionally, in embodiments of this application, the first transmission mode may alternatively be understood as simultaneously sending the transport block on the plurality of antenna panels based on SRS resources indicated by a plurality of SRIs, where the transport block is sent on each antenna panel based on one SRS resource. For example, as shown in FIG. 2, when the network device indicates an SRS resource #1 and an SRS resource #4 to the terminal using two SRIs, the terminal sends the transport block to the network device 210 on the antenna panel 231 through a channel 1, and the terminal simultaneously sends the transport block to the network device 220 on the antenna panel 232 through a channel 4. When the network device indicates an SRS resource #2 and an SRS resource #3 to the terminal using two SRIs, the terminal sends the transport block to the network device 210 on the antenna panel 232 through a channel 2, and the terminal simultaneously sends the transport block to the network device 220 on the antenna panel 231 through a channel 3. Herein, there may be a co-location relationship between the SRS resource indicated by the SRI and a DMRS port for sending the transport block on the antenna panel. Therefore, the first transmission mode may alternatively be understood as simultaneously sending the transport block on the plurality of antenna panels based on a plurality of co-location relationships.

It should be understood that "simultaneous" in the first transmission mode and the second transmission mode in embodiments of this application may be understood as that there is an overlap between time units in which the plurality of antenna panels on the terminal send the transport block to the network device, or "simultaneous" may be understood as a same moment, a same time, or a same time unit.

The time unit in embodiments of this application may be one or more symbols, one or more slots, one or more mini-slots (mini-slots), one or more frames (frames), one or more subframes (subframes), one or more half-frames (half-frames), or the like.

In this application, the transport block (transport block, TB) may be a basic unit for data exchange between a media access control (media access control, MAC) sublayer and a physical layer, which is processed by the physical layer. In an implementation, the transport block is a data block including a MAC protocol data unit (protocol data unit, PDU).

Optionally, the first transmission mode may also be referred to as a space division multiplexing (space division multiplexing, SDM) mode or an SDM transmission mode.

(2) Second transmission mode

In the second transmission mode, one transport block (or a same transport block) is simultaneously sent based on a plurality of precoding matrices and a plurality of numbers of layers in one-to-one correspondence with the plurality of precoding matrices, and different precoding matrices and numbers of layers are associated with a same part of the transport block. For example, in the second transmission mode, one transport block is simultaneously sent based on two precoding matrices and numbers of layers respectively corresponding to the two precoding matrices, and different precoding matrices and numbers of layers are associated with a same part of the transport block. For details about the precoding matrix, the number of layers, and an antenna panel, refer to the descriptions in the first transmission mode.

It should be understood that the second transmission mode may alternatively be understood as follows: The second transmission mode is a transmission mode in which the plurality of antenna panels simultaneously send one transport block (or a same transport block), or the first transmission mode is a transmission manner in which the plurality of antenna panels simultaneously send one transport block.

The same transport block means that information or data carried in two or more transport blocks is the same. Alternatively, the same transport block refers to a same part of one transport block. Alternatively, the same transport block refers to different redundancy versions (redundancy versions) of one transport block.

In the second transmission mode, the terminal may send the transport block to different network devices or to a same network device via the plurality of antenna panels. The following uses the application scenario shown in FIG. 2 as an example to describe uplink transmission performed by the antenna panel 231 and the antenna panel 232 of the terminal in the second transmission mode.

For example, the terminal 230 sends a transport block to the network device 210 at a first moment via the antenna panel 231, and the terminal 230 simultaneously sends the same transport block to the network device 220 at the first moment via the antenna panel 232.

For another example, the terminal 230 sends a transport block to the network device 210 via the antenna panel 231, and the terminal 230 simultaneously sends the same transport block to the network device 220 via the antenna panel 232.

For another example, the antenna panel 231 and the antenna panel 232 simultaneously send one transport block, where the antenna panel 231 and the antenna panel 232 send a same part of the one transport block, or the antenna panel 231 and the antenna panel 232 on the terminal 230 simultaneously send the one transport block.

For another example, the terminal 230 sends a part of a transport block to the network device 210 via the antenna panel 231, and the terminal simultaneously sends the same part of the transport block to the network device 210 via the antenna panel 232.

For another example, the terminal 230 sends a transport block to the network device 210 via the antenna panel 231, and the terminal simultaneously sends the one transport block to the network device 210 via the antenna panel 232.

As described above in the first transmission mode, the antenna panel may correspond to information #A. In this case, the second transmission mode may alternatively be understood as follows: Based on (or using) a plurality of pieces of information #A, the terminal sends a same data stream of one piece of data (or a same piece of data) at a same time, at a same moment, in a same time period, or simultaneously, sends a same piece of data simultaneously, or sends a same piece of data or a same data stream simultaneously. For example, one piece of data is sent using two TPMIs.

Optionally, the plurality of pieces of information #A are associated with one CDM group.

Optionally, a plurality of SRS resource sets, a plurality of TPMI fields, and/or a plurality of SRI fields are associated with a maximum value of a same number of streams.

Optionally, in embodiments of this application, the second transmission mode may alternatively be understood as simultaneously sending the transport block on the plurality of antenna panels based on SRS resources indicated by a plurality of SRIs, where the transport block is sent on each antenna panel based on one SRS resource. For example, as shown in FIG. 2, when the network device indicates an SRS resource #1 and an SRS resource #4 to the terminal using two SRIs, the terminal sends the transport block to the network device 210 on the antenna panel 231 through a channel 1, and the terminal simultaneously sends the transport block to the network device 220 on the antenna panel 232 through a channel 4. Herein, there may be a co-location relationship between the SRS resource indicated by the SRI and a DMRS port for sending the transport block on the antenna panel. Therefore, the second mode may alternatively be understood as simultaneously sending the same transport block on the plurality of antenna panels based on a plurality of co-location relationships.

Optionally, the second transmission mode may also be referred to as a single frequency network (Single Frequency Network, SFN) mode or an SFN transmission mode.

In some embodiments, the first transmission mode is applicable to enhanced mobile broadband (Enhanced Mobile Broadband, eMBB), that is, a large-capacity scenario, and the second mode is applicable to ultra-reliable low-latency communication (Ultra-Reliable Low-Latency communication, URLLC), that is, a high-reliability scenario.

(3) Third transmission mode

In the third transmission mode, one transport block is sent based on one precoding matrix and a number of layers corresponding to the precoding matrix.

It should be understood that the third transmission mode may alternatively be understood as sending one transport block based on one piece of precoding information and one number of layers, or one channel sounding reference signal resource indicator. For details about the precoding matrix, the number of layers, and an antenna panel, refer to the descriptions in the first transmission mode.

It should be understood that the third transmission mode may alternatively be understood as a transmission mode in which the terminal sends a transport block to the network device via one antenna panel, a transmission mode in which the terminal sends a transport block to the network device based on one antenna panel, or a transmission mode in which the terminal sends a transport block to the network device on one antenna panel.

The application scenario shown in FIG. 2 is used as an example. In the third transmission mode, the terminal 230 sends one transport block to the network device 210 via the antenna panel 231. Alternatively, the terminal 230 sends one transport block to the network device 210 and the network device 220 via the antenna panel 231.

As described above in the first transmission mode, the antenna panel may correspond to information #A. In this case, the third transmission mode may alternatively be understood as follows: The terminal sends data based on (or using) the information #A.

In some embodiments, the third transmission mode may alternatively be understood as sending a transport block via one antenna panel based on one SRS resource set configuration. Specifically, the third transmission mode means that the network device configures one SRS resource set for the terminal, and the terminal sends a transport block to the network device via one antenna panel. In this case, the third transmission mode is used. For example, in the application scenario shown in FIG. 2, when the SRS resource set configured by the network device for the terminal is an SRS resource set #1, the third transmission mode may be understood as that the terminal 230 sends the transport block to the network device 210 via the antenna panel 231, or the terminal 230 sends the transport block to the network device 210 via the antenna panel 232.

In some embodiments, the third transmission mode may alternatively be understood as sending a transport block on one antenna panel based on one SRS resource indicated by one SRI. For example, as shown in FIG. 2, when the network device indicates an SRS resource 1 to the terminal device using one SRI, the terminal sends a transport block to the network device 210 on the antenna panel 231 through a channel 1. Herein, there may be a co-location relationship between the SRS resource indicated by the SRI and a DMRS port for sending the transport block on the antenna panel. Therefore, the third transmission mode may alternatively be understood as sending a transport block based on one co-location relationship.

Optionally, the third transmission mode may also be referred to as a single transmission reception point (single transmission reception point, sTRP) mode or an sTRP transmission mode.

Optionally, transmission related to the third transmission mode may be a single transmission or a plurality of transmissions.

In the first transmission mode and the second transmission mode described above, the plurality of antenna panels of the terminal may perform transmission simultaneously. It is assumed that the terminal has an antenna panel 1 and an antenna panel 2, where the antenna panel 1 has X1 antenna ports, and the antenna panel 2 has X2 antenna ports. When the antenna panel 1 transmits an SRS or a PUSCH, X1 digital channels are required, and when the antenna panel 2 transmits the SRS or the PUSCH, X2 digital channels are required. However, because a capability of the terminal is limited (for example, digital channel costs are high, and the terminal cannot configure an independent digital channel for each antenna panel), a number of digital channels of the terminal may not be capable of meeting simultaneous transmission of all antenna ports of the plurality of antenna panels. In this scenario, how to implement simultaneous transmission of the plurality of panels is a problem that needs to be considered.

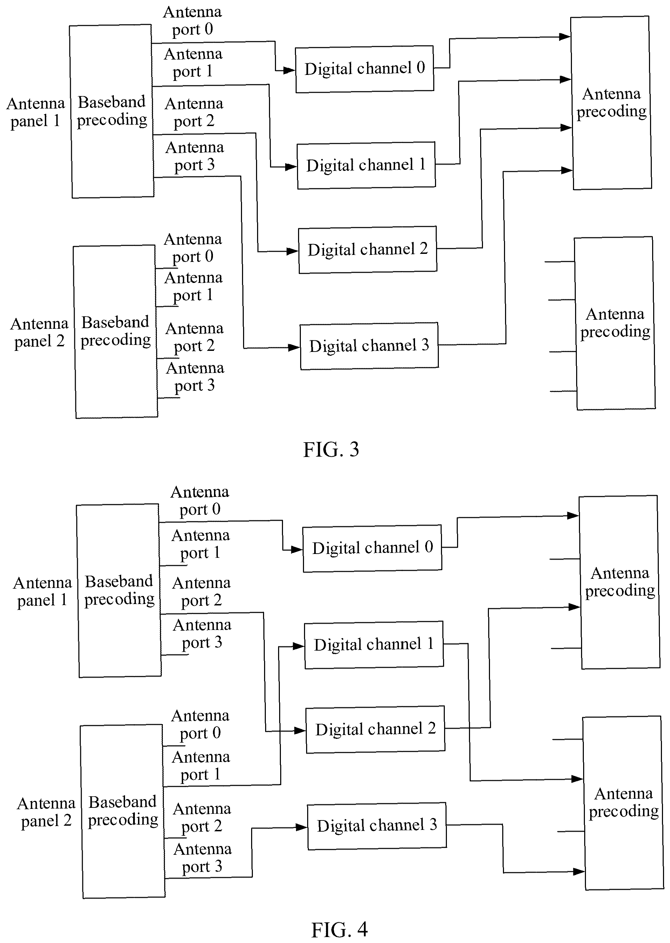

For example, FIG. 3 is a diagram of a structure of a terminal. Refer to FIG. 3. The terminal has an antenna panel 1 and an antenna panel 2. Each antenna panel includes a baseband precoding part and an antenna precoding part, and there are only four digital channels in total. The antenna panel 1 has four antenna ports, and the antenna panel 2 also has four antenna ports. In this case, when the antenna panel 1 transmits an SRS or a PUSCH, four digital channels are required, and similarly, when the panel 2 transmits the SRS or the PUSCH, four digital channels are required. When the terminal sends the SRS, the two antenna panels may send the SRS at different times. Therefore, each antenna panel can use the four digital channels. However, when the two antenna panels of the terminal send the PUSCH, the PUSCH needs to be sent simultaneously, and four digital channels cannot be simultaneously used for the total of eight antenna ports of the two antenna panels. In this scenario, how to implement simultaneous transmission of the two antenna panels needs to be considered.

In view of this, this application provides a communication method. In the method, in a first transmission mode or a second transmission mode, a digital channel of a terminal is shared, or in other words, a plurality of antenna panels of the terminal share the digital channel. In other words, an antenna port used by each antenna panel of the terminal in the first transmission mode or the second transmission mode is a part of antenna ports used in a third transmission mode. Simultaneous transmission of the plurality of antenna panels may be implemented based on a precoding matrix associated with the antenna port used by each antenna panel and a number of streams corresponding to the precoding matrix.

For example, refer to FIG. 4. For the structure of the terminal shown in FIG. 3, an antenna port 0 and an antenna port 2 of the antenna panel 1 may be respectively configured to use a digital channel 0 and a digital channel 2, and an antenna port 1 and an antenna port 3 of the antenna panel 2 may be respectively configured to use a digital channel 1 and a digital channel 3. In addition, one precoding matrix and a corresponding number of streams are configured for the antenna port 0 and the antenna port 2 of the antenna panel 1, and one precoding matrix and a corresponding number of streams are configured for the antenna port 1 and the antenna port 3 of the antenna panel 2, so that simultaneous transmission of the antenna panel 1 and the antenna panel 2 can be implemented.

It should be understood that the digital channel in this application may alternatively be a radio frequency channel, a channel, a port, an antenna port, or the like. The radio frequency channel may be an RF (radio frequency) chain, a TXRU (transceiver unit), or a TRX.

It should be noted that the antenna port in this application may be an SRS port, a port having an SRS port function, or a port obtained by renaming an SRS port with technology evolution. The SRS port, the antenna port, the port, the PUSCH port, and the port in this application is interchangeable. In this application, the SRS resource set may alternatively be a reference signal resource set, or the SRS resource may alternatively be a reference signal resource, where a reference signal is for channel detection.

It should be understood that an element in an antenna port set or a port set described in this application represents/denotes only a relative number, and does not represent an absolute number. For example, an antenna panel has four antenna ports, and relative numbers may be {port 0, port 1, port 2, port 3}, or may be {port 5, port 6, port 7, port 8}. Optionally, {port 0, port 1} is equivalent to {port 0+Q, port 1+Q}, where Q is a positive integer.

The following describes in detail the solution provided in this application with reference to corresponding flowcharts. It may be understood that in the schematic flowcharts provided in this application, the method is mainly illustrated by using an example in which a network device and a terminal serve as execution bodies of the interaction illustration. However, the execution bodies of the interaction illustration are not limited in this application. For example, the network device in the schematic flowcharts may alternatively be a chip, a chip system, or a processor that supports the network device in implementing the method, or may be a logic module or software that can implement all or a part of functions of the network device. The terminal in the schematic flowcharts may alternatively be a chip, a chip system, or a processor that supports the terminal in implementing the method, or may be a logic module or software that can implement all or a part of functions of the terminal.

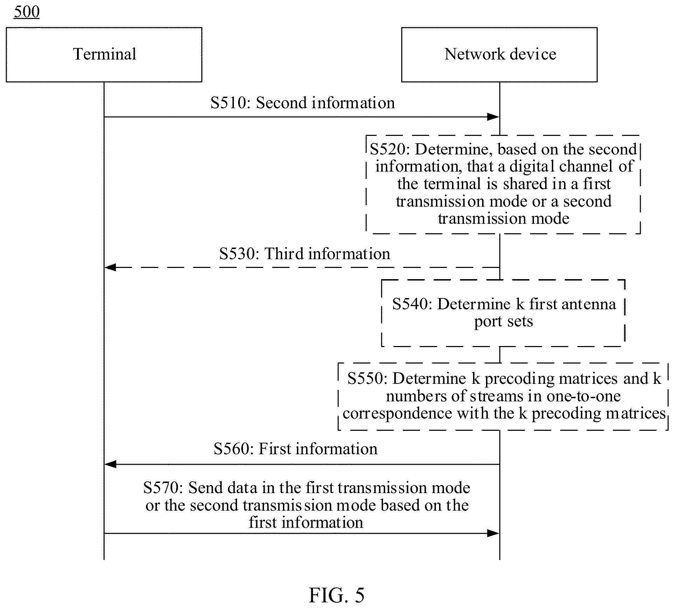

FIG. 5 is a schematic flowchart of a communication method according to this application. The method 500 may include one or more of S510 to S570. The following describes the steps in detail. In the method 500, in a first transmission mode or a second transmission mode, a digital channel of a terminal is shared, or in other words, k (k≥2) antenna panels of the terminal share the digital channel. In other words, an antenna port used by each antenna panel of the terminal in the first transmission mode or the second transmission mode is a part of antenna ports used in a third transmission mode. FIG. 4 is used as an example. The antenna port used by each antenna panel of the terminal in the third transmission mode is ports {0, 1, 2, 3}. In the first transmission mode or the second transmission mode, an antenna port used by the antenna panel 1 of the terminal is the ports {0, 2}, and an antenna port used by the antenna panel 2 of the terminal is the ports {1, 3}.

S510: The terminal sends second information to a network device. Correspondingly, the network device receives the second information from the terminal.

The second information may be carried using capability information of the terminal, or may be carried using other information. Alternatively, the second information is capability information. For example, the second information may be carried in RRC, a MAC CE, or UCI. For example, that the terminal sends the second information may also be referred to as that the terminal reports a capability. For example, any one item of the second information may be referred to as a piece of capability information of the terminal.

The second information may include one or more of the following (1) to (7). For example, in an implementation, the second information may include (6), (7), and one or more of the following (1) to (5). The following describes the items in detail.

(1) Antenna port set that the terminal is capable of using in the first transmission mode or the second transmission mode

The antenna port set that the terminal is capable of using in the first transmission mode or the second transmission mode may also be described as an antenna port set supported by the terminal in the first transmission mode or the second transmission mode, an antenna port set that the terminal is capable of using in the first transmission mode or the second transmission mode, an antenna port set supported by the terminal in the first transmission mode or the second transmission mode, a candidate antenna port set associated with the first transmission mode or the second transmission mode, an antenna port set associated with the first transmission mode or the second transmission mode, an SRS resource set associated with the first transmission mode or the second transmission mode, an SRS resource associated with the first transmission mode or the second transmission mode, or the like.

In the method, the antenna port set that the terminal is capable of using in the first transmission mode or the second transmission mode is a part of an antenna port set used by the terminal in the third transmission mode.

For example, if the antenna port of each antenna panel is the ports {0, 1, 2, 3}, the antenna port set that the terminal is capable of using in the first transmission mode or the second transmission mode may include one or more of the following: the port {0}, the port {1}, the port {2}, the port {3}, the ports {0, 1}, the ports {0, 2}, the ports {0, 3}, the ports {1, 2}, the ports {1, 3}, and the ports {2, 3}.

It should be understood that the antenna port set used by the terminal in the third transmission mode may also be described as an antenna port set supported by the terminal in the third transmission mode, an antenna port set in the third transmission mode, an antenna port set associated with the third transmission mode, or the like.

In a possible implementation, a number of antenna port sets that the terminal is capable of using in the first transmission mode or the second transmission mode is equal to a number of antenna panels of the terminal. In other words, the antenna port set that the terminal is capable of using in the first transmission mode or the second transmission mode is k antenna port sets, where k is the number of antenna panels of the terminal, and k≥2. In this scenario, the k antenna port sets are in one-to-one correspondence with the k antenna panels of the terminal.

For example, the k antenna panels of the terminal are the antenna panel 1 and the antenna panel 2, and the antenna port of each antenna panel is the ports {0, 1, 2, 3}. For example, if the antenna port set that the terminal is capable of using in the first transmission mode or the second transmission mode is the port {0} and the port {1}, it indicates that in the first transmission mode or the second transmission mode, the antenna panel 1 uses the port {0}, and the antenna panel 2 uses the port {1}. For example, if the antenna port set that the terminal is capable of using in the first transmission mode or the second transmission mode is the ports {0, 2} and the ports {1, 3}, it indicates that in the first transmission mode or the second transmission mode, the antenna panel 1 of the terminal uses the ports {0, 2}, and the antenna panel 2 of the terminal uses the ports {1, 3}.

For example, the k antenna panels of the terminal are the antenna panel 1 and the antenna panel 2, the antenna port of the antenna panel 1 is the ports {0, 1, 2, 3}, and the antenna port of the antenna panel 2 is ports {4, 5, 6, 7}. For example, if the antenna port set that the terminal is capable of using in the first transmission mode or the second transmission mode is the port {0} and the port {4}, it indicates that in the first transmission mode or the second transmission mode, the antenna panel 1 uses the port {0}, and the antenna panel 2 uses the port {4}. For example, if the antenna port set that the terminal is capable of using in the first transmission mode or the second transmission mode is the ports {0, 2} and the ports {5, 7}, it indicates that in the first transmission mode or the second transmission mode, the antenna panel 1 of the terminal uses the ports {0, 2}, and the antenna panel 2 of the terminal uses the ports {5, 7}.

For example, in this application, it is assumed that the antenna port of the antenna panel 1 is ports {a, b, c, d}, the antenna port of the antenna panel 2 is ports {e, f, g, h}, and the digital channel of the terminal is a TXRU #1 to a TXRU #4. In this case, the following correspondence may exist: The port a and the port e correspond to the TXRU #1 and cannot be connected to the TXRU #1 together. The port b and the port f correspond to the TXRU #2 and cannot be connected to the TXRU #2 together. The port c and the port g correspond to the TXRU #3 and cannot be connected to the TXRU #3 together. The port d and the port h correspond to the TXRU #4 and cannot be connected to the TXRU #4 together. For example, if the antenna panel 1 uses one of the ports {0, 1, 2, 3}, the antenna panel 2 uses one of the remaining three antenna ports among the ports {0, 1, 2, 3}. If the antenna panel 1 uses two of the ports {0, 1, 2, 3}, the antenna panel 2 uses the other two of the ports {0, 1, 2, 3}.

In another possible implementation, the antenna port set that the terminal is capable of using in the first transmission mode or the second transmission mode is a plurality of antenna port sets, where each antenna port set includes k antenna port subsets, and the k antenna port subsets are in one-to-one correspondence with k antenna panels.

For example, the k antenna panels of the terminal are the antenna panel 1 and the antenna panel 2, and the antenna port of each antenna panel is the ports {0, 1, 2, 3}. For example, the antenna port set that the terminal is capable of using in the first transmission mode or the second transmission mode may be {port {0}, {port {1}}, {port {1}, {port {2}}, {port {2}, {port {3}}, {ports {0, 1}, {ports {2, 3}}, {ports {0, 2},{ports {1, 3}}, {ports {0, 3}, {ports {1, 2}}.

In this implementation, if the third transmission mode is used, the network device needs to determine one antenna port set from the plurality of antenna port sets, and notify the terminal of the antenna port set determined by the network device. It should be understood that the antenna port set determined by the network device herein is k first antenna port sets described in S540 below, and each first antenna port set is an antenna port subset of the antenna port set.

(2) Number of antenna ports that the terminal is capable of using in the first transmission mode or the second transmission mode: In this application, the number is denoted as Y.

The number of antenna ports that the terminal is capable of using in the first transmission mode or the second transmission mode may also be described as a number of antenna ports that the terminal is capable of using at most, or supports, or supports at most in the first transmission mode or the second transmission mode, a maximum number of antenna ports (or a maximum number of antenna ports) supported by the terminal in the first transmission mode or the second transmission mode, a number of antenna ports associated with the first transmission mode or the second transmission mode, a maximum number of antenna ports associated with the first transmission mode or the second transmission mode, or the like.

In the method, the number of antenna ports that the terminal is capable of using in the first transmission mode or the second transmission mode is less than a number of antenna ports used by the terminal in the third transmission mode. In this application, the number of antenna ports used by the terminal in the third transmission mode is denoted as X. $1 \leq Y < X$.

It should be understood that the number of antenna ports used by the terminal in the third transmission mode may also be described as a maximum number of antenna ports used by the terminal in the third transmission mode, a number of antenna ports associated with the third transmission mode, a maximum number of antenna ports associated with the third transmission mode, a number of antenna ports of the terminal in the third transmission mode, or the like.

It should be noted that the number of antenna ports that the terminal is capable of using in the first transmission mode or the second transmission mode, that is, X, is also (6) in the following.

In a possible implementation, if the number, reported by the terminal, of antenna ports that the terminal is capable of using in the first transmission mode or the second transmission mode is Y, it indicates that each antenna panel of the terminal can use a maximum of Y antenna ports in the first transmission mode or the second transmission mode. When the first transmission mode or the second transmission mode is used, a number of antenna ports actually used by each antenna panel of the terminal may be Y, or may be any value greater than or equal to 1 and less than Y. For example, the k antenna panels of the terminal are the antenna panel 1 and the antenna panel 2, and the antenna port of each panel is the ports {0, 1, 2, 3}. If Y reported by the terminal is 2, it indicates that in the first transmission mode or the second transmission mode, the antenna panel 1 and the antenna panel 2 may use one of the corresponding ports {0, 1, 2, 3}, or may use two of the ports {0, 1, 2, 3}.

In another possible implementation, if the number, reported by the terminal, of antenna ports that the terminal is capable of using in the first transmission mode or the second transmission mode is Y, it indicates that each antenna panel of the terminal uses Y antenna ports in the first transmission mode or the second transmission mode. For example, if Y=2, in the first transmission mode or the second transmission mode, each antenna panel of the terminal uses two antenna ports instead of one antenna port.

(3) Type of a precoding matrix supported by the terminal in the first transmission mode or the second transmission mode: The type of the precoding matrix is non-coherent or partial coherent.

In an implementation, if the terminal reports that the type of the precoding matrix supported by the terminal in the first transmission mode or the second transmission mode is non-coherent or partial coherent, it indicates that the digital channel of the terminal is shared in the first transmission mode or the second transmission mode. If the terminal reports that the type of the precoding matrix supported by the terminal in the first transmission mode or the second transmission mode is fully coherent, it indicates that the digital channel of the terminal is not shared in the first transmission mode or the second transmission mode.

In another implementation, if the terminal reports that the type of the precoding matrix supported by the terminal in the first transmission mode or the second transmission mode is non-coherent or partial coherent, it indicates that the digital channel of the terminal is shared in the first transmission mode or the second transmission mode. If the terminal does not report the type of the precoding matrix supported by the terminal in the first transmission mode or the second transmission mode, it indicates that the digital channel of the terminal is not shared in the first transmission mode or the second transmission mode.

(4) Sharing of the digital path in the first transmission mode or the second transmission mode

In an implementation, regardless of whether the digital channel is shared in the first transmission mode or the second transmission mode, the terminal reports to the network device. For example, whether the digital channel is shared may be indicated using one-bit information. Specifically, when the one-bit information is 0, it indicates that the digital channel is not shared; or when the one-bit information is 1, it indicates that the digital channel is shared. Alternatively, when the one-bit information is 1, it indicates that the digital channel is not shared; or when the one-bit information is 0, it indicates that the digital channel is shared. The network device may learn, based on the one-bit information, whether the digital path is shared in the first transmission mode or the second transmission mode.

In another implementation, the terminal reports to the network device only in a scenario in which the digital channel is shared in the first transmission mode or the second transmission mode, and the terminal does not report to the network device in a scenario in which the digital channel is not shared in the first transmission mode or the second transmission mode. For example, sharing of the digital channel in the first transmission mode or the second transmission mode is indicated using one bit. If receiving one-bit information, the network device may learn that the digital channel is shared in the first transmission mode or the second transmission mode; or if not receiving one-bit information, the network device may learn that the digital channel is not shared in the first transmission mode or the second transmission mode.

(5) Maximum number of streams that the terminal is capable of transmitting in the first transmission mode or the second transmission mode

The maximum number of streams that the terminal is capable of transmitting in the first transmission mode or the second transmission mode may also be described as a number of streams that the terminal is capable of transmitting in the first transmission mode or the second transmission mode, a maximum number of streams in the first transmission mode or the second transmission mode, a number of streams in the first transmission mode or the second transmission mode, a maximum number of streams associated with the first transmission mode or the second transmission mode, a number of streams associated with the first transmission mode or the second transmission mode, or the like. It should be understood that although these descriptions are different, the descriptions indicate a same meaning, and all indicate a maximum number of streams that each antenna panel of the terminal is capable of transmitting when the first transmission mode or the second transmission mode is used.

The maximum number of streams that the terminal is capable of transmitting in the first transmission mode or the second transmission mode is less than a maximum number of streams that the terminal is capable of transmitting in the third transmission mode.

In an implementation, if the terminal does not report the maximum number of streams that the terminal is capable of transmitting in the first transmission mode or the second transmission mode, it indicates that the digital channel of the terminal is not shared in the first transmission mode or the second transmission mode; or if the terminal reports the maximum number of streams that the terminal is capable of transmitting in the first transmission mode or the second transmission mode, it indicates that the digital channel of the terminal is shared in the first transmission mode or the second transmission mode.

It may be understood from the foregoing descriptions that if the terminal reports one or more of (1) to (5), it indicates that the digital channel of the terminal is shared in the first transmission mode or the second transmission mode. Correspondingly, after receiving the second information reported by the terminal, the network device may learn that the digital channel of the terminal is shared in the first transmission mode or the second transmission mode. After learning that the digital channel of the terminal is shared in the first transmission mode or the second transmission mode, the network device can ensure that a capability of the terminal is not exceeded when performing uplink sending configuration in the first transmission mode or the second transmission mode.

(6) Number X of antenna ports

The number of antenna ports may alternatively be a maximum number of antenna ports or a maximum number of antenna ports.

The number of antenna ports indicates a number of antenna ports on each antenna panel of the terminal, or indicates a number of antenna ports corresponding to an SRS resource in each SRS resource set, or indicates a number of antenna ports that the terminal is capable of using or supports in the third transmission mode.

For example, if the number of antenna ports reported by the terminal is 4, it indicates that the terminal has one or more panels with four antenna ports; or if the number of antenna ports reported by the terminal is 2, it indicates that the terminal has one or more panels with two antenna ports. The structure of the terminal shown in FIG. 3 or FIG. 4 is used as an example. The antenna port of each antenna panel is the ports {0, 1, 2, 3}, that is, the number of antenna ports is 4. In this case, the number of antenna ports reported by the terminal is 4.

(7) Maximum number of streams the terminal is capable of transmitting

The maximum number of streams that the terminal is capable of transmitting may also be described as a number of streams that the terminal is capable of transmitting, a maximum number of streams, or the like.

For example, the maximum number of streams that the terminal is capable of transmitting may be specifically maxNumberMIMO-Layers/maxNumberMIMO-LayersCB-PUSCH. For maxNumberMIMO-Layers and maxNumberMIMO-LayersCB-PUSCH, refer to the conventional technology.

The maximum number of streams that the terminal is capable of transmitting is the maximum number of streams that the terminal is capable of transmitting in the third transmission mode.

In a possible implementation, one or more of the foregoing (1) to (7) may be sent using a same piece of signaling, or may be sent using a plurality of pieces of signaling. If one or more of (1) to (7) are sent using the same piece of signaling, the second information is carried in the signaling. If one or more of (1) to (7) are sent using the plurality of pieces of signaling, it may be considered that the plurality of pieces of signaling include the second information. A sending sequence of the plurality of pieces of signaling is not limited in this application.

For example, in this application, sharing of the digital channel of the terminal in the first transmission mode or the second transmission mode may also be understood as any one of the following:

(a) a number of antenna ports used when the terminal performs transmission in the third transmission mode is equal to a sum of numbers of antenna ports used by the k antenna panels when the terminal performs transmission in the first transmission mode or the second transmission mode;

(b) a number of antenna ports used when the terminal performs transmission in the third transmission mode is greater than a number of antenna ports used by any antenna panel when the terminal performs transmission in the first transmission mode or the second transmission mode;

(c) a number of rows of a precoding matrix corresponding to the third transmission mode is equal to a sum of numbers of rows of k precoding matrices corresponding to the first transmission mode or the second transmission mode; or

(d) a number of rows of a precoding matrix corresponding to the third transmission mode is greater than a number of rows of any one of k precoding matrices corresponding to the first transmission mode or the second transmission mode.

S520: The network device determines, based on the second information, that the digital channel of the terminal is shared in the first transmission mode or the second transmission mode.

This step is an optional step. In other words, the network device may perform this step, or may not perform this step. For example, after receiving the second information reported by the terminal, the network device may perform S520, or after receiving the second information reported by the terminal, the network device may directly perform a subsequent step without performing S520, for example, perform S530, S540, or S550.

Any one of (1) to (5) described in S510 may directly or indirectly indicate that the digital channel of the terminal is shared in the first transmission mode or the second transmission mode. Therefore, in a scenario in which S520 is performed, the network device may determine, based on the second information reported by the terminal, that the digital channel of the terminal is shared in the first transmission mode or the second transmission mode.

For example, S520 may alternatively be: The network device determines any one or more of (a) to (d) described in S510.

For example, S520 may alternatively be: The network device determines Y. Alternatively, S520 may alternatively be S540.

Y may be reported by the terminal in S510, or Y may be determined according to a default rule. For example, the default rule may be Y=X/k. For example, if Y is 4, and k is 2, X=2.

S530: The network device sends third information to the terminal, where the third information indicates k SRS resource sets. Correspondingly, the terminal receives the third information.

This step is an optional step. In other words, the network device may send the third information to the terminal, or may not send the third information to the terminal.

In an implementation, S530 may be performed after S520. In another implementation, S530 may be performed after S510.

The k SRS resource sets are in one-to-one correspondence with the k antenna panels of the terminal, or the k SRS resource sets are respectively associated with the k antenna panels of the terminal. Each SRS resource set includes a first SRS resource and a second SRS resource, a number of antenna ports corresponding to the first SRS resource is X, and a number of antenna ports corresponding to the second SRS resource is Y.

Subsequently, if the network device indicates the terminal to perform sending in the third transmission mode, the network device notifies the terminal of precoding matrices for X ports, and the terminal selects a corresponding TPMI table based on the number X of antenna ports, determines a precoding matrix, and performs, based on the precoding matrix, transmission on an antenna port corresponding to the first SRS resource. If the network device indicates the terminal to perform sending in the first transmission mode or the second transmission mode, the network device notifies the terminal of precoding matrices for Y ports, and the terminal selects a corresponding TPMI table based on the number Y of antenna ports, determines a precoding matrix, and performs, based on the precoding matrix, transmission on an antenna port corresponding to the second SRS resource.

S540: The network device determines the k first antenna port sets.

This step is an optional step. For example, if the terminal reports the k first antenna port sets, the network device may not determine the k first antenna port sets; or if the terminal does not report the k first antenna port sets, and the network device cannot learn the k first antenna port sets in another manner, the network device may determine the k first antenna port sets.

The k first antenna port sets are antenna ports used by the terminal in the first transmission mode or the second transmission mode. The k first antenna port sets are in one-to-one correspondence with the k antenna panels of the terminal. A number of antenna ports included in the first antenna port set is less than or equal to the number Y of antenna ports that the terminal is capable of using in the first transmission mode or the second transmission mode. The first antenna port set is a part of a second antenna port set, and the second antenna port set is antenna ports used by the terminal in the third transmission mode.

In a possible implementation, if the terminal reports (1) described in S510, the network device may determine the antenna port set reported by the terminal as the k first antenna port sets, or the network device may determine the k first antenna port sets from the antenna port set reported by the terminal.

For example, the k antenna panels of the terminal are the antenna panel 1 and the antenna panel 2, and the antenna port of each antenna panel is the ports {0, 1, 2, 3}. For example, if the antenna port set reported by the terminal is the ports {0, 2} and the ports {1, 3}, it may be determined that the k first antenna port sets are the ports {0, 2} and the ports {1, 3}, the antenna panel 1 uses the ports {0, 2}, and the antenna panel 2 uses the ports {1, 3}. For example, if the antenna port set reported by the terminal is {port {0}, port {1}}, {port {1}, port {0}}, {port {1}, port {2}}, {port {2}, port {1}}, {port {2}, port {3}}, {port {3}, port {2}}, {ports {0, 1}, ports {2, 3}}, {ports {2, 3}, ports {0, 1}}, {ports {1, 3}, ports{0, 2}}, {ports {0, 2}, ports {1, 3}}, {ports {0, 3}, ports {1, 2}}, and {ports {1, 2}, ports {0, 3}}, the network device may determine the k first antenna port sets from these antenna port sets. For example, if the determined k first antenna port sets are {ports {0, 2}, ports {1, 3}}, the ports {0, 2} and the ports {1, 3} each are a first antenna port set, the antenna panel 1 uses the ports {0, 2}, and the antenna panel 2 uses the ports {1, 3}.

In a possible implementation, if the terminal does not report (1) described in S510 or does not report the k first antenna port sets, the network device may determine the k first antenna port sets based on the number Y of antenna ports that the terminal is capable of using in the first transmission mode or the second transmission mode (that is, (2) described in S510).

For example, it is assumed that Y is 2, the antenna panels of the terminal are the antenna panel 1 and the antenna panel 2, and the antenna ports of the two antenna panels are the ports {0, 1, 2, 3}. It may be predefined that the antenna port set that the terminal is capable of using or supports in the first transmission mode or the second transmission mode when Y is 2 is {ports {0, 1}, ports {2, 3}}, {ports {0, 2}, ports {1, 3}}, and {ports {0, 3}, ports {1, 2}}. In this case, the network device may select one of the three sets as the k first antenna port sets. In addition, the network device further needs to notify the terminal of the k first antenna port sets determined by the network device.

For example, it is still assumed that Y is 2, the antenna panels of the terminal are the antenna panel 1 and the antenna panel 2, and the antenna ports of the two antenna panels are the ports {0, 1, 2, 3}. It may be predefined that first antenna port sets respectively corresponding to the antenna panel 1 and the antenna panel 2 when Y is 2 are the ports {0, 2} and the ports {1, 3}. In this case, the network device may determine the predefined antenna port sets respectively corresponding to the antenna panel 1 and the antenna panel 2 as the k first antenna port sets. In this manner, the terminal may directly determine the k first antenna port sets, and the network device does not need to notify the k first antenna ports.

In the foregoing manner, the terminal does not need to report an antenna port set associated with each antenna panel in the first transmission mode or the second transmission mode, so that reporting overheads of the terminal can be reduced. Further, in the first transmission mode or the second transmission mode, the unique antenna port set associated with each antenna panel can reduce implementation complexity of the terminal, and reduce signaling overheads for notification by the network device.

In a possible implementation, if S530 is performed, the k first antenna port sets are antenna ports corresponding to a second SRS resource set in the k SRS resource sets. In this manner, S540 may be performed before S530. In addition, because the terminal has been notified of the second SRS resource in S530, the network device does not need to notify the terminal of the k first antenna port sets.

S550: The network device determines the k precoding matrices and k numbers of streams in one-to-one correspondence with the k precoding matrices.

The k precoding matrices and the k numbers of streams are in one-to-one correspondence with the k first antenna port sets. In other words, the k precoding matrices and the k numbers of streams are in one-to-one correspondence with the k antenna panels.

It should be understood that for CB-based uplink transmission, the network device may determine, based on SRSs sent by the terminal based on k first SRS resources, the k precoding matrices and the numbers of streams respectively corresponding to the k precoding matrices. The k first SRS resources may be configured for the terminal in S530, or may be configured for the terminal before S510 or S550 when S530 is not performed.

In a possible implementation, the numbers of rows of the k precoding matrices are Y.

In a possible implementation, the numbers of rows of the k precoding matrices are X. For any precoding matrix, only Y rows in the precoding matrix include non-zero elements, or Y rows of non-zero elements in the precoding matrix are located in different rows. When Y=2, a row including a non-zero element in a 1st precoding matrix does not overlap, does not intersect, or is different from a row including a non-zero element in a 2nd precoding matrix, or an antenna port corresponding to a row including a non-zero element in a 1st precoding matrix does not overlap, does not intersect, or is different from an antenna port corresponding to a row including a non-zero element in a 2nd precoding matrix. Optionally, when the number of streams associated with the precoding matrix is less than 2, the precoding matrix may be a non-coherent or partial coherent precoding matrix; or when the number of streams associated with the precoding matrix is greater than or equal to 2, the precoding matrix may be a non-coherent precoding matrix.

S560: The network device sends first information to the terminal. Correspondingly, the terminal receives the first information from the network device.

The first information indicates the first transmission mode or the second transmission mode, and indicates the k precoding matrices and the k numbers of streams. The first information may be DCI, or may be other signaling having a DCI function.

It should be understood that the precoding matrix and a number of layers corresponding to the precoding matrix may be indicated using a precoding information and number of layers (Precoding information and number of layers) field or an SRI field.

Optionally, when the k first antenna port sets need to be notified to the terminal, the first information may further indicate the k first antenna port sets. According to this solution, the network device indicates, to the terminal, the antenna port used by each panel for sending in the first transmission mode or the second transmission mode, so that performance of the terminal can be ensured. For example, the network device may select an antenna port configuration with best performance for each antenna panel of the terminal, to maximize the performance of the terminal.

In addition, the network device may notify the terminal of the k first antenna port sets using an RRC message, a MAC CE, or the like.

For example, it is assumed that Y is 2, the antenna panels of the terminal are the antenna panel 1 and the antenna panel 2, and the antenna ports of the two antenna panels are the ports {0, 1, 2, 3}. The antenna port set that the terminal is capable of using or supports in the first transmission mode or the second transmission mode when Y is 2 is {ports {0, 1}, ports {2, 3}}, {ports {0, 2}, ports {1, 3}}, and {ports {0, 3}, ports {1, 2}}. In this case, the k first antenna port sets may be indicated using two bits or three bits. For example, a relationship between the two bits and the antenna port set is shown in Table 4, and a relationship between the three bits and the antenna port set is shown in Table 5.

Table 4

| Two bits | Antenna port set |
|---|---|
| 00 | The antenna panel 1 is associated with the ports {0, 1}, and the antenna panel 2 is associated with the ports {2, 3}. |
| 01 | The antenna panel 1 is associated with the ports {0, 2}, and the antenna panel 2 is associated with the ports {1, 3}. |
| 10 | The antenna panel 1 is associated with the ports { {0, 3}, and the antenna panel 2 is associated with the ports {1, 2}. |
| Reserved | Reserved |

Table 5

| Three bits | Antenna port set |
|---|---|
| 000 | The antenna panel 1 is associated with the ports {0, 1}, and the antenna panel 2 is associated with the ports {2, 3}. |
| 001 | The antenna panel 1 is associated with the ports {2, 3}, and the antenna panel 2 is associated with the ports {0, 1}. |
| 010 | The antenna panel 1 is associated with the ports { {0, 2}, and the antenna panel 2 is associated with the ports {1, 3}. |
| 011 | The antenna panel 1 is associated with the ports { {1, 3}, and the antenna panel 2 is associated with the ports {0, 2}. |
| 100 | The antenna panel 1 is associated with the ports {{0, 3}, and the antenna panel 2 is associated with the ports {1, 2}. |

(continued)

| Three bits | Antenna port set |
|---|---|
| 101 | The antenna panel 1 is associated with the ports {1, 2}, and the antenna panel 2 is associated with the ports {{0, 3}. |

As shown in Table 4, if the network device notifies the terminal of "00", it indicates that the first antenna port set of the antenna panel 1 is the ports {0, 1}, and the first antenna port set of the antenna panel 2 is the ports {2, 3}. As shown in Table 5, if the network device notifies the terminal of "001", it indicates that the first antenna port set of the antenna panel 1 is the ports {2, 3}, and the first antenna port set of the antenna panel 2 is the ports {0, 1} ports{2, 3}.

For example, the k first antenna ports may be indicated by adding a new bit to the DCI. For example, the foregoing two bits or three bits may be two-bit information added to the DCI.

For example, the k first antenna port sets may alternatively be indicated using an existing field in a current protocol. In this manner, addition of a new DCI field can be avoided, and DCI indication overheads can be reduced.

For example, an SRS resource set indicator field in the current DCI has two bits in total. The two bits have four states in total, where a $1^{st}$ and $2^{nd}$ bit states indicate the third transmission mode, a $3^{rd}$ bit state indicates the first transmission mode/the second transmission mode, and a $4^{th}$ bit state is reserved. It is assumed that Y is 2, and the antenna panels of the terminal are the antenna panel 1 and the antenna panel 2. If the antenna port set that the terminal is capable of using or supports in the first transmission mode or the second transmission mode when Y is 2 is a port set 1, a port set 2, a port set 3, and a port set 4, for a correspondence between a bit state and information indicated by the bit state, refer to Table 6; or if the antenna port set that the terminal is capable of using or supports in the first transmission mode or the second transmission mode when Y is 2 is a port set 1 and a port set 2, for a correspondence between a bit state and information indicated by the bit state, refer to Table 7.

Table 6

| SRS resource set indicator (two bits) | |
|---|---|
| 00 | Indicating the third transmission mode, and indicating to use the antenna panel 1 for sending |
| 01 | Indicating the third transmission mode, and indicating to use the antenna panel 2 for sending |
| 10 | Indicating the first transmission mode/the second transmission mode, and indicating that the antenna panel 1 is associated with the port set 1 and the antenna panel 2 is associated with the port set 3 |
| 11 | Indicating the first transmission mode/the second transmission mode, and indicating that the antenna panel 1 is associated with the port set 2 and the antenna panel 2 is associated with the port set 4 |

Table 7

| SRS resource set indicator (two bits) | |
|---|---|
| 00 | Indicating the third transmission mode, and indicating to use the antenna panel 1 for sending |
| 01 | Indicating the third transmission mode, and indicating to use the antenna panel 2 for sending |
| 10 | Indicating the first transmission mode/the second transmission mode, and indicating that the antenna panel 1 is associated with the port set 1 and the antenna panel 2 is associated with the port set 2 |
| 11 | Indicating the first transmission mode/the second transmission mode, and indicating that the antenna panel 1 is associated with the port set 2 and the antenna panel 2 is associated with the port set 1 |

As shown in Table 6, if the network device notifies the terminal of "10", it indicates that the first antenna port set of the antenna panel 1 is the port set 1, and the first antenna port set of the antenna panel 2 is the port set 3. As shown in Table 7, if the network device notifies the terminal of "10", it indicates that the first antenna port set of the antenna panel 1 is the port set 1, and the first antenna port set of the antenna panel 2 is the port set 2.

S570: The terminal sends data to the network device in the first transmission mode or the second transmission mode based on the first information.

After receiving the first information, the terminal may first determine, based on the first information, that the first transmission mode or the second transmission mode needs to be used to transmit data, may determine the k precoding matrices and numbers of layers respectively corresponding to the k precoding matrices, and may further determine the k first antenna port sets. The terminal may perform uplink transmission in the first transmission mode or the second transmission mode based on the foregoing information.

In an implementation, if the numbers of rows of the k precoding matrices are Y, the terminal may determine a TPMI table based on Y, and then determine the precoding matrix and the number of streams based on the first information and the table.

CB-based uplink transmission is used as an example. From the foregoing description in CB-based uplink transmission that "after receiving the DCI, the terminal may first determine the TPMI table based on the number of SRS ports of the SRS resource indicated by the SRI field and the uplink maximum rank (maxRank) and the power mode (ul-FullPowerTransmission) that are indicated by the RRC", it can be learned that the terminal may determine a table based on a number of antenna ports used by the terminal, an uplink maximum rank (that is, (5) in S510), and a power mode. In the method 500, the number of antenna ports used by the terminal is a number of antenna ports included in the first antenna port set. Therefore, the terminal may determine the TPMI table based on the number Y of antenna ports included in the first antenna port set, and determine the precoding matrix and the number of layers based on the table and a field that is in the first information and that indicates the precoding matrix and the number of layers. For example, if the number of antenna ports included in the first antenna port set is 2, and the number of layers indicated by the first information is 1, the precoding matrix may be determined based on the TPMI table shown in Table 8. For another example, if the number of antenna ports included in the first antenna port set is 2, and the number of layers indicated by the first information is 2, the precoding matrix may be determined based on the TPMI table shown in Table 9.

Table 8 Precoding matrix W for two antenna ports with a number of layers being 1

| TPMI index | Precoding matrix $W$ (sorted from left to right in ascending order of TPMI indexes) | | | | | | | |
|---|---|---|---|---|---|---|---|---|
| 0 to 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

Table 9 Precoding matrix W for two antenna ports with a number of layers being 2

| TPMI index | Precoding matrix $W$ (sorted from left to right in ascending order of TPMI indexes) | | |
|---|---|---|---|
| 0 to 2 | $\frac{1}{\sqrt{2}}\begin{bmatrix}1&0\\0&1\end{bmatrix}$ | $\frac{1}{2}\begin{bmatrix}1&1\\1&-1\end{bmatrix}$ | $\frac{1}{2}\begin{bmatrix}1&1\\j&-j\end{bmatrix}$ |

In the current protocol, a number of antenna ports corresponding to a TPMI is the same as a number of SRS ports. In addition, a larger number of ports indicates a larger number of TPMIs and higher DCI indication overheads required. In this embodiment of this application, in the first transmission mode or the second transmission mode, the TPMI whose number of antenna ports is the number of antenna ports used by each antenna panel of the terminal is indicated, so that TPMI indication overheads can be reduced.

In an implementation, if the numbers of rows of the k precoding matrices are X, the terminal may select a TPMI table based on X, and determine the precoding matrix and the number of streams based on the first information and the table.

In an example, if the terminal reports (3) in S510, the terminal considers that the number of rows of the precoding matrix is X; or if the terminal does not report (3) in S510, the terminal considers that the number of rows of the precoding matrix is Y.

In conclusion, according to the communication method provided in this application, in the first transmission mode or the second transmission mode, the digital channel of the terminal is shared, or in other words, the plurality of antenna panels of the terminal share the digital channel. In other words, the antenna port used by each antenna panel of the terminal in the first transmission mode or the second transmission mode is a part of the antenna ports used in the third transmission mode. Simultaneous transmission of the plurality of antenna panels may be implemented based on a precoding matrix associated with the antenna port used by each antenna panel and a number of streams corresponding to the precoding matrix.

The following describes several specific examples of the method 500. It should be understood that these examples should not constitute any limitation on this application. In the following methods, CB-based transmission is used as an example. In the following descriptions, an example in which the k antenna panels of the terminal are the antenna panel 1 and the antenna panel 2, and the antenna port of each panel is the ports {0, 1, 2, 3} is used for description.

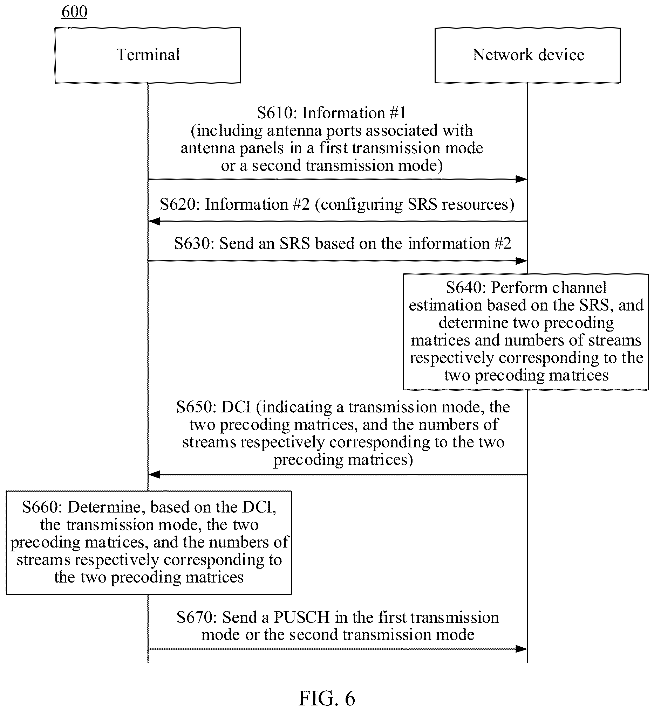

FIG. 6 is a schematic flowchart of a communication method according to this application. The method 600 may include S610 to S670. The following describes the steps. In the method, a terminal may report antenna port sets used by an antenna panel 1 and an antenna panel 2 in a first transmission mode or a second transmission mode.

S610: The terminal sends information #1 to a network device. Correspondingly, the network device receives the information #1.

The information #1 includes (1), (5), (6), and (7) described in S510. The antenna port set in (1) is ports {0, 1} associated with the antenna panel 1 and ports {2, 3} associated with the antenna panel 2.

For example, the information #1 may be carried using capability information of the terminal, or may be carried using other information. Alternatively, the information #1 is capability information. For example, the information #1 may be carried in RRC, a MAC CE, or UCI.

S620: The network device sends information #2 to the terminal based on the first information. Correspondingly, the terminal receives the information #2.

The information #2 indicates two SRS resource sets, and the two SRS resource sets are in one-to-one correspondence with the two antenna panels. Each SRS resource set includes one or more SRS resources, and each SRS resource corresponds to four antenna ports.

S630: The terminal sends an SRS based on the plurality of SRS resource sets.

S640: The network device performs channel estimation based on the SRS, and determines two precoding matrices and numbers of streams respectively corresponding to the two precoding matrices.

The two precoding matrices are a precoding matrix #1 and a precoding matrix #2. The precoding matrix #1 corresponds to the antenna panel #1. The precoding matrix #1 corresponds to the antenna port set ports {0, 1}. The precoding matrix #2 corresponds to the antenna panel #2. The precoding matrix #1 corresponds to the antenna port set ports {2, 3}. Numbers of rows of the precoding matrix #1 and the precoding matrix #2 are 2.

S650: The network device sends DCI to the terminal. Correspondingly, the terminal receives the DCI.

The DCI indicates the first transmission mode or the second transmission mode, and indicates a TPMI #1 and a TPMI #2. The TPMI #1 indicates the precoding matrix #1 and a number #1 of layers corresponding to the precoding matrix #1. The TPMI #2 indicates the precoding matrix #2 and a number #2 of layers corresponding to the precoding matrix #2.

S660: The terminal determines, based on the DCI, that a transmission mode is the first transmission mode or the second transmission mode, and determines the precoding matrix #1, the number #1 of layers, the precoding matrix #2, and the number #2 of layers.

It should be understood that after receiving the DCI, the terminal may obtain the TPMI #1 and the TPMI #2 based on the DCI, and then determine, from a corresponding TPMI table based on a number 2 of antenna ports, the precoding matrix #1 indicated by the TPMI #1 and the precoding matrix #2 indicated by the TPMI #2.

S670: The terminal sends a PUSCH in the first transmission mode or the second transmission mode.

Specifically, the terminal sends data on the ports {0, 1} of the antenna panel 1 and the ports {2, 3} of the antenna panel 2 in the first transmission mode or the second transmission mode based on the precoding matrix #1, the number #1 of layers, the precoding matrix #2, and the number #2 of layers.

According to the communication method provided in this application, in a scenario in which a digital channel of the terminal is shared in the first transmission mode or the second transmission mode, or in other words, a plurality of antenna panels of the terminal share the digital channel, the terminal reports an antenna port used by each antenna panel in the first transmission mode or the second transmission mode, and the network device notifies, based on the antenna port reported by the terminal and a channel estimation result, the terminal of a precoding matrix associated with the antenna port used by each antenna panel and a number of streams corresponding to the precoding matrix. Therefore, the terminal can implement simultaneous transmission of the plurality of antenna panels based on a notification of the network device.

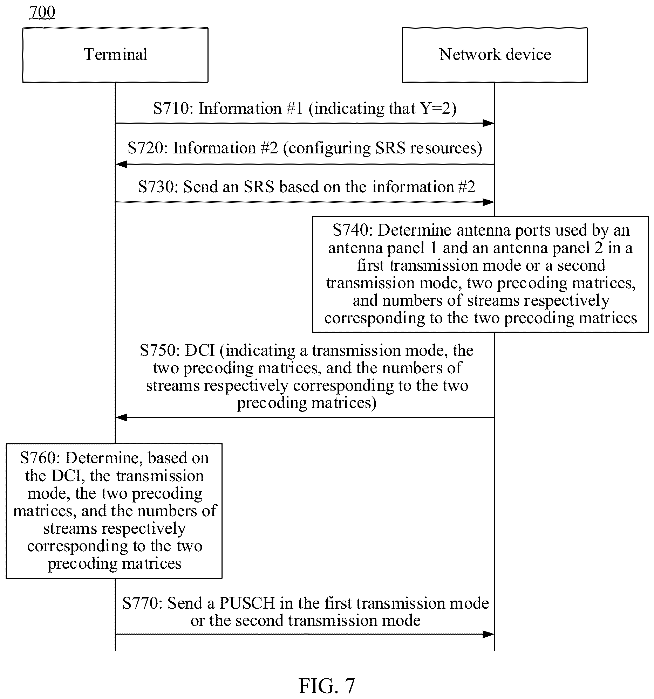

FIG. 7 is a schematic flowchart of a communication method according to this application. The method 700 may include S710 to S770. The following describes the steps. In the method, a terminal does not report antenna port sets used by an antenna panel 1 and an antenna panel 2 in a first transmission mode or a second transmission mode.

S710: The terminal sends information #1 to a network device. Correspondingly, the network device receives the information #1.

The information #1 includes (2), (5), (6), and (7) described in S510. Y in (2) is 2.

For example, the information #1 may be carried using capability information of the terminal, or may be carried using other information. Alternatively, the information #1 is capability information. For example, the information #1 may be carried in RRC, a MAC CE, or UCI.

S720: The network device sends information #2 to the terminal based on the first information. Correspondingly, the terminal receives the information #2.

The information #2 indicates two SRS resource sets, and the two SRS resource sets are in one-to-one correspondence with the two antenna panels. Each SRS resource set includes one or more SRS resources, and each SRS resource corresponds to four antenna ports.

S730: The terminal sends an SRS based on the plurality of SRS resource sets.

S740: The network device determines antenna ports used by the antenna panel 1 and the antenna panel 2 in the first transmission mode or the second transmission mode, two precoding matrices, and numbers of streams respectively corresponding to the two precoding matrices.

The two precoding matrices are a precoding matrix #1 and a precoding matrix #2. The precoding matrix #1 corresponds to the antenna panel #1. The precoding matrix #1 corresponds to an antenna port set ports {0, 1}. The precoding matrix #2 corresponds to the antenna panel #2. The precoding matrix #1 corresponds to an antenna port set ports {2, 3}.

In a first manner, the ports {0, 1} and the ports {2, 3} are antenna port sets selected by the network device based on a channel estimation result. For example, the network device may select, based on the channel estimation result, an antenna port set with a good channel condition.

In a second manner, the ports {0, 1} and the ports {2, 3} are predefined antenna port sets respectively used by the two antenna panels in the first transmission mode or the second transmission mode when Y=2.

In a third manner, a plurality of candidate combinations are predefined, and the ports {0, 1} and the ports {2, 3} are antenna port sets selected by the network device based on a channel estimation result.

S750: The network device sends DCI to the terminal. Correspondingly, the terminal receives the DCI.

The DCI indicates the first transmission mode or the second transmission mode, and indicates a TPMI #1 and a TPMI #2. The TPMI #1 indicates the precoding matrix #1 and a number #1 of layers corresponding to the precoding matrix #1. The TPMI #2 indicates the precoding matrix #2 and a number #2 of layers corresponding to the precoding matrix #2. Numbers of rows of the precoding matrix #1 and the precoding matrix #2 are 2.

If the antenna port sets used by the antenna panel 1 and the antenna panel 2 in the first transmission mode or the second transmission mode are determined in S740 in the first manner or the third manner, the antenna port sets used by the antenna panel 1 and the antenna panel 2 in the first transmission mode or the second transmission mode further need to be indicated to the terminal in S750 or using the RRC or the MAC CE. If the antenna port sets used by the antenna panel 1 and the antenna panel 2 in the first transmission mode or the second transmission mode are determined in S740 in the second manner, the terminal does not need to be notified.

S760: The terminal determines, based on the DCI, that a transmission mode is the first transmission mode or the second transmission mode, and determines the precoding matrix #1, the number #1 of layers, the precoding matrix #2, and the number #2 of layers.

It should be understood that after receiving the DCI, the terminal may obtain the TPMI #1 and the TPMI #2 based on the DCI, and then determine, from a corresponding TPMI table based on a number 2 of antenna ports, the precoding matrix #1 indicated by the TPMI #1 and the precoding matrix #2 indicated by the TPMI #2.

S770: The terminal sends a PUSCH in the first transmission mode or the second transmission mode.

Specifically, the terminal sends data on the ports {0, 1} of the antenna panel 1 and the ports {2, 3} of the antenna panel 2 in the first transmission mode or the second transmission mode based on the precoding matrix #1, the number #1 of layers, the precoding matrix #2, and the number #2 of layers.

According to the communication method provided in this application, in a scenario in which a digital channel of the terminal is shared in the first transmission mode or the second transmission mode, or in other words, a plurality of antenna panels of the terminal share the digital channel, the terminal reports a number of antenna ports that the terminal is capable of using in the first transmission mode or the second transmission mode, and the network device may determine, based on the information or a predefined rule, an antenna port used by each antenna panel in the first transmission mode or the second transmission mode. In addition, the network device may determine and notify the terminal of a precoding matrix associated with the antenna port used by each antenna panel and a number of streams corresponding to the precoding matrix, and may further notify the antenna port used by each antenna panel in the first transmission mode or the second transmission mode. Therefore, the terminal can implement simultaneous transmission of the plurality of antenna panels based on a notification of the network device.

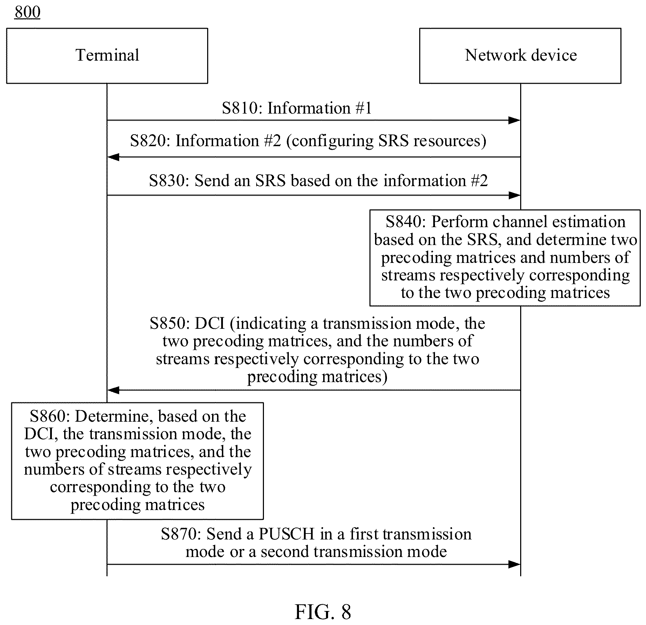

FIG. 8 is a schematic flowchart of a communication method according to this application. The method 800 may include S810 to S870. The following describes the steps. In the method, a terminal reports that a type of a precoding matrix supported in a first transmission mode or a second transmission mode is a non-coherent or partial coherent precoding matrix.

S810: The terminal sends information #1 to a network device. Correspondingly, the network device receives the information #1.

The information #1 includes (3), (5), (6), and (7) described in S510. Optionally, the information #1 may further include (1) and/or (2) described in S510. Y in (2) is 2.

For example, the information #1 may be carried using capability information of the terminal, or may be carried using other information. Alternatively, the information #1 is capability information. For example, the information #1 may be carried in RRC, a MAC CE, or UCI.

S820: The network device sends information #2 to the terminal based on the information #1. Correspondingly, the terminal receives the information #2.

The information #2 indicates two SRS resource sets, and the two SRS resource sets are in one-to-one correspondence with two antenna panels. Each SRS resource set includes one or more SRS resources, and each SRS resource corresponds to four antenna ports.

S830: The terminal sends an SRS based on the plurality of SRS resource sets.

S840: The network device performs channel estimation based on the SRS, and determines two precoding matrices and numbers of streams respectively corresponding to the two precoding matrices.

Numbers of rows of the two precoding matrices are 4. In addition, a number of rows of non-zero elements in each precoding matrix is 2. The number of rows of the non-zero elements may be determined according to a default rule. For example, the preset rule is Y=2/X=2/4=2. Alternatively, the number of rows of the non-zero elements may be reported in S810, that is, Y=2 is reported in S810.

The two precoding matrices are a precoding matrix #1 and a precoding matrix #2. The precoding matrix #1 corresponds to an antenna panel #1, and the precoding matrix #2 corresponds to an antenna panel #2. Both the precoding matrix #1 and the precoding matrix #2 are non-coherent or partial coherent precoding matrices. For example, an antenna port set corresponding to a non-zero row in the precoding matrix #1 is ports {0, 1}, and an antenna port set corresponding to a non-zero row in the precoding matrix #2 is ports {2, 3}.

In a first manner, the ports {0, 1} and the ports {2, 3} are selected by the network device based on a channel estimation result. For example, the ports {0, 1} and the ports {2, 3} are antenna port sets that are selected by the network device based on the channel estimation result and that have good channel conditions.

In a second manner, the ports {0, 1} and the ports {2, 3} are predefined antenna port sets respectively used by the two antenna panels in the first transmission mode or the second transmission mode when Y=2.

In a third manner, a plurality of candidate combinations are predefined, and the ports {0, 1} and the ports {2, 3} are combinations selected by the network device from the plurality of candidate combinations based on a channel estimation result.

In a fourth manner, the antenna port set reported by the terminal in the information #1 is the ports {0, 1} and the ports {2, 3}.

It should be understood that a row including a non-zero element in the precoding matrix #1 does not overlap, does not intersect, or is different from a row including a non-zero element in the precoding matrix #2.

Optionally, when a number of streams associated with the precoding matrix #1 (or the precoding matrix #2) is less than 2, the precoding matrix #1 (or the precoding matrix #2) may be a non-coherent or partial coherent precoding matrix; or when a number of streams associated with the precoding matrix #1 (or the precoding matrix #2) is greater than or equal to 2, the precoding matrix #1 (or the precoding matrix #2) may be a non-coherent precoding matrix.

S850: The network device sends DCI to the terminal. Correspondingly, the terminal receives the DCI.

The DCI indicates the first transmission mode or the second transmission mode, and indicates a TPMI #1 and a TPMI #2. The TPMI #1 indicates the precoding matrix #1 and a number #1 of layers corresponding to the precoding matrix #1. The TPMI #2 indicates the precoding matrix #2 and a number #2 of layers corresponding to the precoding matrix #2. Numbers of rows of the precoding matrix #1 and the precoding matrix #2 are 2.

S860: The terminal determines, based on the DCI, that a transmission mode is the first transmission mode or the second transmission mode, and determines the precoding matrix #1, the number #1 of layers, the precoding matrix #2, and the number #2 of layers.

It should be understood that after receiving the DCI, the terminal may obtain the TPMI #1 and the TPMI #2 based on the DCI, and then determine, from a corresponding TPMI table based on a number 4 of antenna ports, the precoding matrix #1 indicated by the TPMI #1 and the precoding matrix #2 indicated by the TPMI #2.

S870: The terminal sends a PUSCH in the first transmission mode or the second transmission mode.

Specifically, the terminal sends data on the ports {0, 1} of the antenna panel 1 and the ports {2, 3} of the antenna panel 2 in the first transmission mode or the second transmission mode based on the precoding matrix #1, the number #1 of layers, the precoding matrix #2, and the number #2 of layers.

According to the communication method provided in this application, in a scenario in which a digital channel of the terminal is shared in the first transmission mode or the second transmission mode, or in other words, a plurality of antenna panels of the terminal share the digital channel, the terminal reports that the type of the precoding matrix supported by the terminal in the first transmission mode or the second transmission mode is a non-coherent or non-coherent precoding matrix, and the network device may determine, based on the information, and notify the terminal of a precoding matrix associated with each antenna panel and a number of streams corresponding to the precoding matrix. The terminal may determine, based on information notified by the network device, an antenna port used by each antenna panel in the first transmission mode or the second transmission mode, a corresponding precoding matrix, and a corresponding number of layers. Therefore, the terminal can implement simultaneous transmission of the plurality of antenna panels based on a notification of the network device.

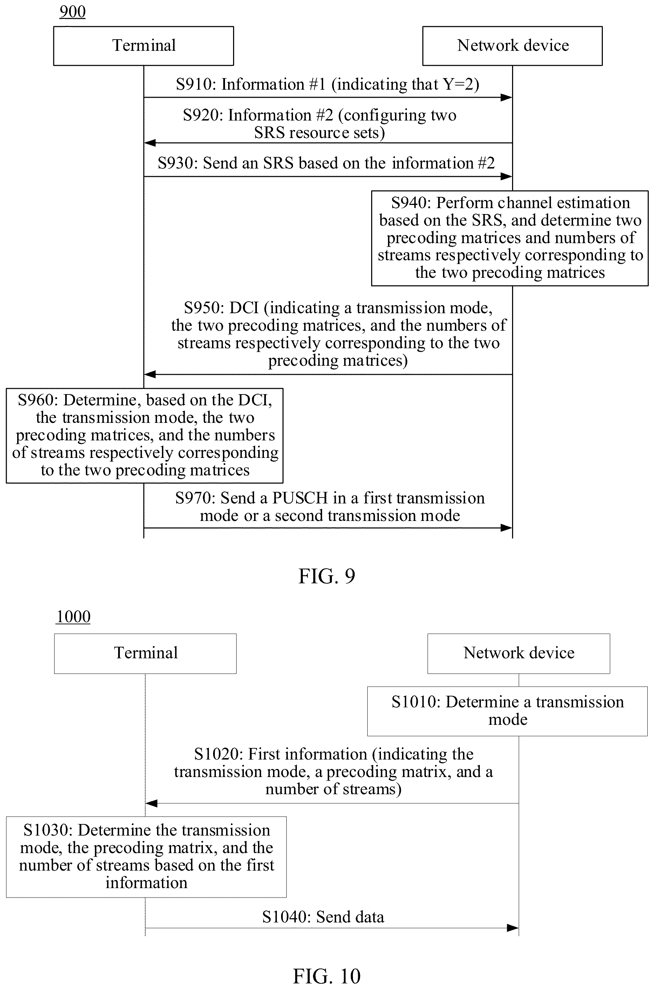

FIG. 9 is a schematic flowchart of a communication method according to this application. The method 900 may include S910 to S970. The following describes the steps. In the method, a network device configures, for each antenna panel of a terminal, an SRS resource used in a first transmission mode or a second transmission mode.

S910: The terminal sends information #1 to the network device. Correspondingly, the network device receives the information #1.

The information #1 includes (2), (5), (6), and (7) described in S510. Optionally, the information #1 may further include (4) described in S510.

For example, the information #1 may be carried using capability information of the terminal, or may be carried using other information. Alternatively, the information #1 is capability information. For example, the information #1 may be carried in RRC, a MAC CE, or UCI.

S920: The network device sends information #2 to the terminal based on the first information. Correspondingly, the terminal receives the information #2.

The information #2 indicates an SRS resource set #1 and an SRS resource set #2. The SRS resource set #1 includes an SRS resource #B, the SRS resource set #1 corresponds to an antenna panel #1, and a number of antenna ports corresponding to the SRS resource #B is 2. The SRS resource set #2 includes S SRS resources #D, the SRS resource set #2 corresponds to an antenna panel #2, and a number of antenna ports corresponding to the SRS resource #D is 2. The SRS resource #B and the SRS resource #D are for transmission in the first transmission mode or the second transmission mode. Optionally, the SRS resource set #1 includes an SRS resource #A, and a number of antenna ports corresponding to the SRS resource #A is 4. The SRS resource set #2 includes an SRS resource #C, and a number of antenna ports corresponding to the SRS resource #C is 4. The SRS resource #A and the SRS resource #C are used in a third transmission mode.

S930: The terminal sends an SRS based on the SRS resource set #1 and the SRS resource set #2.

S940: The network device performs channel estimation based on the SRS, and determines two precoding matrices and numbers of streams respectively corresponding to the two precoding matrices.

The two precoding matrices are a precoding matrix #1 and a precoding matrix #2, and numbers of rows of the precoding matrix #1 and the precoding matrix #2 are 2.

S950: The network device sends DCI to the terminal. Correspondingly, the terminal receives the DCI.

The DCI indicates the first transmission mode or the second transmission mode, and indicates a TPMI #1 and a TPMI #2. The TPMI #1 indicates the precoding matrix #1 and a number #1 of layers corresponding to the precoding matrix #1. The TPMI #2 indicates the precoding matrix #2 and a number #2 of layers corresponding to the precoding matrix #2.

S960: The terminal determines, based on the DCI, that a transmission mode is the first transmission mode or the second transmission mode, and determines the precoding matrix #1, the number #1 of layers, the precoding matrix #2, and the number #2 of layers.

It should be understood that after receiving the DCI, the terminal may obtain the TPMI #1 and the TPMI #2 based on the DCI, and then determine, from a corresponding TPMI table based on a number 2 of antenna ports (which may be learned based on the SRS resource #B and the SRS resource #D), the precoding matrix #1 indicated by the TPMI #1 and the precoding matrix #2 indicated by the TPMI #2.

S970: The terminal sends a PUSCH in the first transmission mode or the second transmission mode.

Specifically, the terminal sends, in the first transmission mode or the second transmission mode based on the precoding matrix #1, the number #1 of layers, the precoding matrix #2, and the number #2 of layers, data on antenna ports associated with the SRS resource #B and the SRS resource #D, or sends data on antenna ports used to send the SRS resource #B and the SRS resource #D.

According to the communication method provided in this application, in a scenario in which a digital channel of the terminal is shared in the first transmission mode or the second transmission mode, or in other words, a plurality of antenna panels of the terminal share the digital channel, the network device configures, for each antenna panel of the terminal, an SRS resource used in the first transmission mode/the second transmission mode, so that the terminal can learn, based on the configuration, an antenna port used by each antenna panel in the first transmission mode or the second transmission mode. Then, the network device may determine and notify the terminal of a precoding matrix and a number of layers that correspond to each antenna panel in the first transmission mode or the second transmission mode. Therefore, the terminal can implement simultaneous transmission of the plurality of antenna panels based on a notification of the network device.

In the method, when the antenna panels share the digital channel, the terminal can be prevented from exposing an association relationship between each panel and the digital channel. The foregoing describes one communication method in this application. This application further provides another communication method. The following describes the method.

In the third transmission mode, the network device needs to indicate only one precoding matrix. In the first transmission mode or the second transmission mode, the network device needs to indicate a plurality of precoding matrices. Specifically, how to indicate precoding matrices in different transmission modes is a problem that needs to be resolved.

In view of this, according to some methods provided in this application, precoding matrices in different transmission modes can be indicated, and indication overheads can be reduced. The following describes the method.

It should be noted that in the method described above, in the first transmission mode or the second transmission mode, the digital channel of the terminal is shared. However, in the method described below, in the first transmission mode or the second transmission mode, the digital channel of the terminal may be shared, or may not be shared.

FIG. 10 is a schematic flowchart of a communication method according to this application. The method may include S1010 to S1040. The following describes the steps.

S1010: A network device determines a transmission mode for a terminal.

The transmission mode is one of a first transmission mode, a second transmission mode, and a third transmission mode. For details about the first transmission mode, the second transmission mode, and the third transmission mode, refer to the foregoing descriptions.

S1020: The network device sends first information to the terminal. Correspondingly, the terminal receives the first information.

For example, the first information may be DCI, or may be other signaling having a DCI function.

The first information indicates the transmission mode determined by the network device in S1010, and indicates a precoding matrix and a number of streams that correspond to the transmission mode.

When the transmission mode is the first transmission mode or the second transmission mode, the first information indicates k precoding matrices and numbers of streams respectively corresponding to the k precoding matrices. Consistent with a meaning of k in the foregoing method, k represents a number of antenna panels of the terminal.

When the transmission mode is the third transmission mode, the first information indicates one precoding matrix and one number of streams.

S1030: The terminal determines, based on the first information, the transmission mode, and the precoding matrix and the number of streams that correspond to the transmission mode.

S1040: The terminal sends data to the network device based on the transmission mode, and the precoding matrix and the number of streams that correspond to the transmission mode.

For ease of distinguishing between precoding matrices and numbers of streams in different modes, in the following, the precoding matrix and the number of streams in the first transmission mode or the second transmission mode are referred to as a first precoding matrix and a first number of streams, and the precoding matrix and the number of streams in the third transmission mode are referred to as a second precoding matrix and a second number of streams.

The following describes several manners for indicating the first precoding matrix, the first number of streams, the second precoding matrix, and the second number of streams.

Manner 1

The first information includes k fields, and an $i^{th}$ field among the k fields indicates an $i^{th}$ first precoding matrix and an $i^{th}$ first number of streams, where i=1, 2, ..., or k. In the third transmission mode, a part or all of bits obtained by concatenating the k fields or bits obtained by concatenating the k fields and a first field indicate the second precoding matrix and the second number of streams.

When a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode.

A bit length required to indicate the second precoding matrix and the second number of streams is determined by the number of antenna ports used in the third transmission mode and a maximum number of streams in the third transmission mode.

It should be noted that in the method 1000, that the digital channel of the terminal is shared in the first transmission mode or the second transmission mode may also be understood as follows: The terminal reports one or more of (1) to (5) described in S510 or one or more of (a) to (d) described in S510. For how to determine whether the digital channel of the terminal is shared in the first transmission mode or the second transmission mode, refer to the related descriptions in the method 500. Details are not described herein again.

Manner 1 is described in detail below using an example in which the lengths of the k fields are $L_1$, $L_2$, ..., and $L_k$ and the bit length required to indicate the second precoding matrix and the second number of streams is L.

Specifically, in a case in which $L_1+L_2+...+L_k>L$, when the transmission mode is the third transmission mode, L bits among $L_1+L_2+...+L_k$ bits indicate the second precoding matrix and the second number of streams, and another bit is set to zero, reserved, skipped by the terminal, or ignored by the terminal. For example, first $(L_1+L_2+...+L_k)$-L bits or last $(L_1+L_2+...+L_k)$-L bits among the $L_1+L_2+...+L_k$ bits may be set to zero, reserved, skipped by the terminal, or ignored by the terminal. Optionally, a length of the first field is 0, or the first field is default.

In a case in which $L_1+L_2+...+L_k=L$, $L_1+L_2+...+L_k$ bits indicate the second precoding matrix and the second number of streams.

In a case in which $L_1+L_2+...+L_k<L$, L bits obtained by concatenating $L_1+L_2+...+L_k$ bits and the first field indicate the second precoding matrix and the second number of streams, and a length of the first field is $L-(L_1+L_2+...+L_k)$. In this scenario, when the transmission mode is the first transmission mode or the second transmission mode, the first field is set to zero, reserved, skipped by the terminal, or ignored by the terminal.

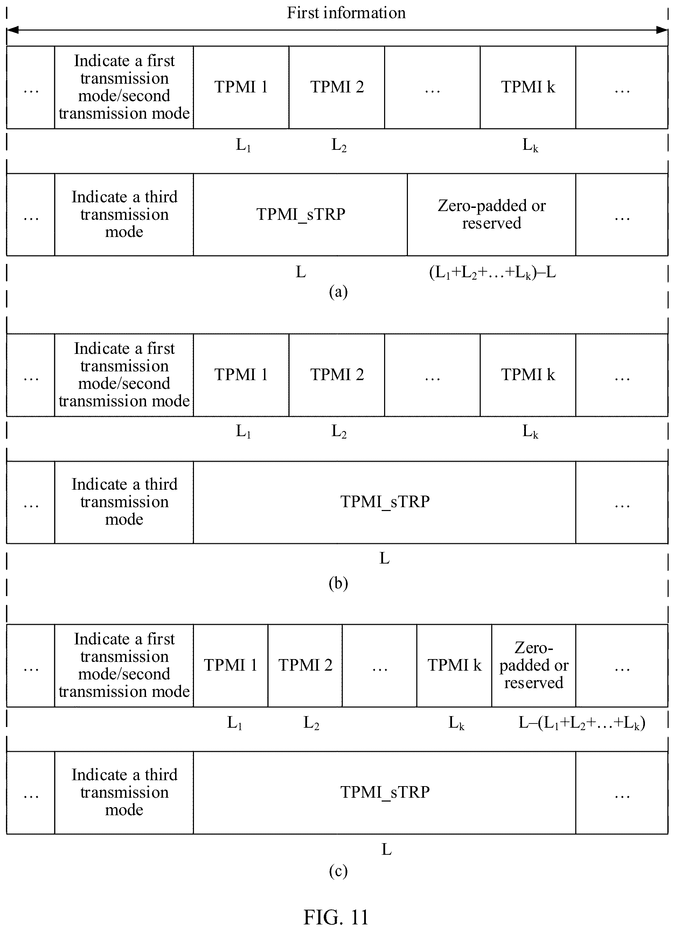

FIG. 11 is a diagram of a format for implementing the first information in Manner 1. (a) in FIG. 11 shows the case in which $L_1+L_2+...+L_k>L$. (b) in FIG. 11 shows the case in which $L_1+L_2+...+L_k=L$. (c) in FIG. 11 shows the case in which $L_1+L_2+...+L_k<L$.

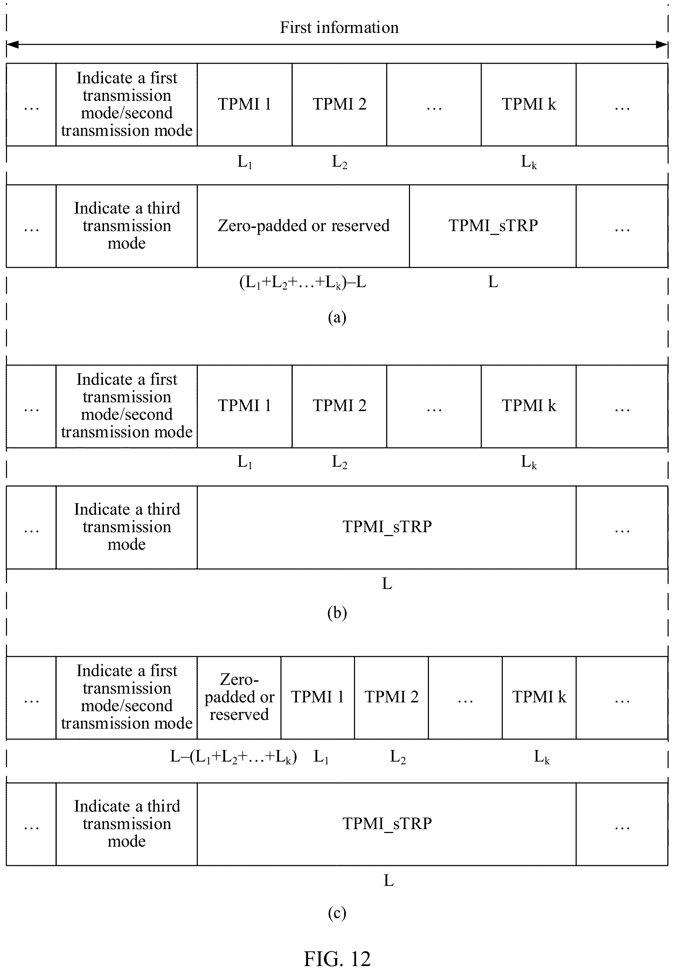

FIG. 12 is a diagram of another format for implementing the first information in Manner 1. (a) in FIG. 12 shows the case in which $L_1+L_2+...+L_k>L$. (b) in FIG. 12 shows the case in which $L_1+L_2+...+L_k=L$. (c) in FIG. 12 shows the case in which $L_1+L_2+...+L_k<L$.

In the formats shown in FIG. 11 and FIG. 12, the ith first precoding matrix and the ith first number of streams are indicated by a TPMI i, and the second precoding matrix and the second number of streams are indicated by TPMI_sTRP.

Manner 2

When the transmission mode is the first transmission mode or the second transmission mode, the first information includes k fields, and the k fields indicate k first precoding matrices and k first numbers of streams in one-to-one correspondence with the k first precoding matrices. When the transmission mode is the third transmission mode, the first information includes a first field, and the first field indicates the second precoding matrix and the second number of streams. Optionally, a start location of the first field is aligned with start locations of the k fields, or an end location of the first field is aligned with end locations of the k fields.

When a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. A length of the first field is determined by the number of antenna ports used in the third transmission mode and a maximum number of streams in the third transmission mode.

It should be understood that k first antenna port sets are in one-to-one correspondence with k antenna panels.

Manner 2 is described in detail below using an example in which the lengths of the k fields are $L_1$, $L_2$, ..., and $L_k$ and the length of the first field is L.

Specifically, in a case in which $L_1+L_2+...+L_k>L$, when the transmission mode is the third transmission mode, the first field is L bits among $L_1+L_2+...+L_k$ bits, and another bit among the $L_1+L_2+...+L_k$ bits is set to zero, reserved, skipped by the terminal, or ignored by the terminal. For example, the first field may be first L bits or last L bits among the $L_1+L_2+...+L_k$ bits.

In a case in which $L_1+L_2+...+L_k=L$, $L_1+L_2+...+L_k$ bits are the first field.

In a case in which $L_1+L_2+...+L_k<L$, when the transmission mode is the first transmission mode or the second transmission mode, $L-(L_1+L_2+...+L_k)$ bits before or after $L_1+L_2+...+L_k$ bits are set to zero, reserved, skipped by the terminal, or ignored by the terminal, to be aligned with the first field.

A person skilled in the art may understand that effects achieved in Manner 2 are the same as those achieved in Manner 1.

Manner 3

The first information includes W bits indicating a precoding matrix and a number of streams. W is a larger one of $L_1+L_2+...+L_k$ and L. $L_1+L_2+...+L_k$ is a sum of numbers of bits required to indicate, in the first transmission mode or the second transmission mode, k first precoding matrices and first numbers of streams in one-to-one correspondence with the k first precoding matrices. L is a number of bits required to indicate the second precoding matrix and the second number of streams in the third transmission mode.

When a digital channel of the terminal is shared in the first transmission mode or the second transmission mode, a length of each of the k fields is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, a length of each of the k fields is determined by a number of antenna ports used by the terminal (that is, a number of antenna ports used by the terminal in the third transmission mode) and a maximum number of streams in the first transmission mode or the second transmission mode, or a length of each of the k fields is determined by a number of antenna ports that the terminal is capable of using in the first transmission mode or the second transmission mode or a number of antenna ports of the terminal, and a maximum number of streams in the first transmission mode or the second transmission mode. L is determined by the number of antenna ports used in the third transmission mode and a maximum number of streams in the third transmission mode.

A person skilled in the art may understand that effects achieved in Manner 3 are the same as those achieved in Manner 1.

Precoding matrices and numbers of streams in different transmission modes are indicated in any one of the foregoing Manner 1 to Manner 3, so that bit overheads can be reduced, a length of the DCI can be reduced, and a success rate of blind detection by the terminal on the DCI can be increased.

Manner 4

K=2, and the first information includes a first field and a second field. A length of the first field is a larger one of a first length and a second length.

The first length is determined by a number of antenna ports used in the third transmission mode and a maximum number of streams in the third transmission mode.

When a digital channel of the terminal is shared in the first transmission mode or the second transmission mode, the second length is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, the second length is determined by a number of antenna ports used by the terminal (that is, a number of antenna ports used by the terminal in the third transmission mode) and a maximum number of streams in the first transmission mode or the second transmission mode. Alternatively, the second length is determined by a number of antenna ports that the terminal is capable of using in the first transmission mode or the second transmission mode or a number of antenna ports of the terminal, and a maximum number of streams in the first transmission mode or the second transmission mode. A length of the second field is the second length.

When the transmission mode is the first transmission mode or the second transmission mode, the first field indicates a 1st first precoding matrix and a 1st first number of streams, and the second field indicates a 2nd first precoding matrix and a 2nd first number of streams. When the transmission mode is the third transmission mode, the first field indicates the second precoding matrix and the second number of streams, and the second field is set to zero, reserved, skipped by the terminal, or ignored by the terminal.

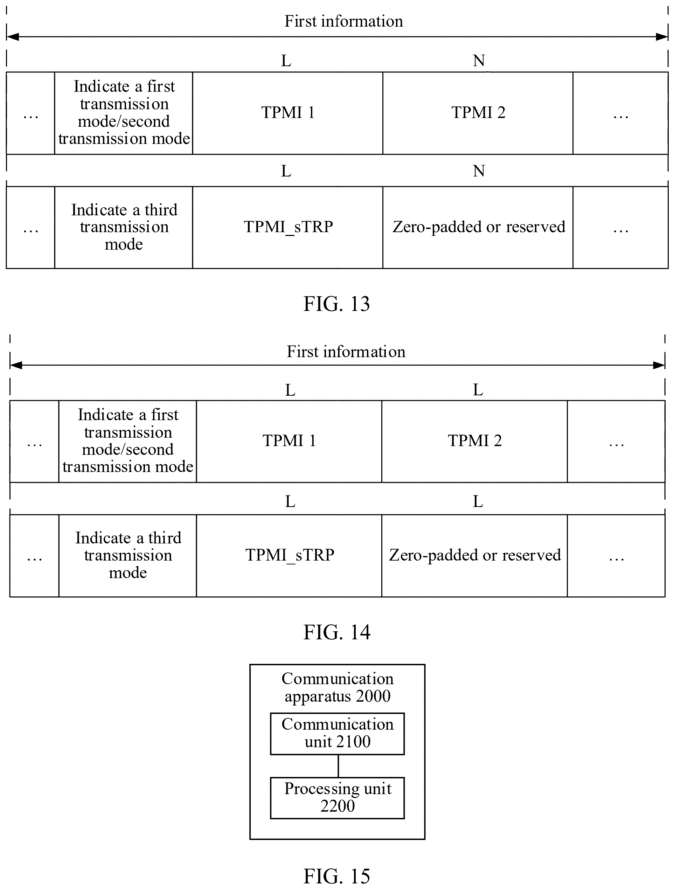

FIG. 13 is a diagram of a format for implementing the first information in Manner 4. Refer to FIG. 13. The length of the first field is L bits, and the length of the second field is N bits. The 1st first precoding matrix and the 1st first number of streams are indicated by a TPMI 1, the 2nd first precoding matrix and the 2nd first number of streams are indicated by a TPMI 2, and the second precoding matrix and the second number of streams are indicated by TPMI_sTRP.

Manner 5

K=2, and the first information includes a first field and a second field. A length of the first field is a larger one of a first length and a second length.

The first length is determined by a number of antenna ports used in the third transmission mode and a maximum number of streams in the third transmission mode. When a digital channel of the terminal is shared in the first transmission mode or the second transmission mode, the second length is determined by a number of antenna ports that the terminal is capable of using in the first transmission mode or the second transmission mode and a maximum number of streams in the first transmission mode or the second transmission mode. When a digital channel of the terminal is not shared in the first transmission mode or the second transmission mode, the second length is determined by a number of antenna ports used by the terminal (that is, a number of antenna ports used by the terminal in the third transmission mode) and a maximum number of streams in the first transmission mode or the second transmission mode. Alternatively, the second length is determined by a number of antenna ports that the terminal is capable of using in the first transmission mode or the second transmission mode or a number of antenna ports of the terminal, and a maximum number of streams in the first transmission mode or the second transmission mode. A length of the second field is the same as that of the first field.

When the transmission mode is the first transmission mode or the second transmission mode, the first field indicates a $1^{st}$ first precoding matrix and a $1^{st}$ first number of streams, and the second field indicates a $2^{nd}$ first precoding matrix and a $2^{nd}$ first number of streams. When the transmission mode is the third transmission mode, the first field indicates the second precoding matrix and the second number of streams, and the second field is set to zero, reserved, skipped by the terminal, or ignored by the terminal.

For example, FIG. 14 is a diagram of a format for implementing the first information in Manner 5. Refer to FIG. 14. An average length of the first field and the second field is L bits. The $1^{st}$ first precoding matrix and the $1^{st}$ first number of streams are indicated by a TPMI 1, the $2^{nd}$ first precoding matrix and the $2^{nd}$ first number of streams are indicated by a TPMI 2, and the second precoding matrix and the second number of streams are indicated by TPMI_sTRP.

Optionally, if a first condition is satisfied, Manner 1, Manner 2, or Manner 3 is used.

The first condition may include: The digital channel of the terminal is not shared in the first transmission mode or the second transmission mode; and/or the digital channel of the terminal is shared in the first transmission mode or the second transmission mode, and a bit length required to indicate the k first precoding matrices and the k first numbers of streams is not less than the bit length required to indicate the second precoding matrix and the second number of streams.

Optionally, if a second condition is satisfied, Manner 4 or Manner 5 is used.

The second condition is: The digital channel of the terminal is shared in the first transmission mode or the second transmission mode; or the digital channel of the terminal is shared in the first transmission mode or the second transmission mode, and the bit length required to indicate the k first precoding matrices and the k first numbers of streams is less than the bit length required to indicate the second precoding matrix and the second number of streams.

Optionally, if the digital channel of the terminal is not shared in the first transmission mode or the second transmission mode, Manner 1 is used; or if the digital channel of the terminal is shared in the first transmission mode or the second transmission mode, Manner 4 or Manner 5 is used.

Optionally, if the digital channel of the terminal is not shared in the first transmission mode or the second transmission mode, or the digital channel of the terminal is shared in the first transmission mode or the second transmission mode, and the bit length required to indicate the k first precoding matrices and the k first numbers of streams is less than the bit length required to indicate the second precoding matrix and the second number of streams, Manner 1 is used; or if the digital channel of the terminal is shared in the first transmission mode or the second transmission mode, or the digital channel of the terminal is not shared in the first transmission mode or the second transmission mode, and the bit length required to indicate the k first precoding matrices and the k first numbers of streams is not less than the bit length required to indicate the second precoding matrix and the second number of streams, Manner 4 or Manner 5 is used.

For example, it may be determined, using one or more of the following, that the digital channel of the terminal is not shared in the first transmission mode or the second transmission mode:

the terminal explicitly or implicitly indicates, to the network device, that the digital channel of the terminal is not shared in the first transmission mode or the second transmission mode;

the terminal reports, to the network device, that a number of antenna ports used by each antenna panel for transmission in the first transmission mode or the second transmission mode is less than a number of antenna ports used in the third transmission mode; or

the terminal reports, to the network device, an antenna port used by each antenna panel in the first transmission mode or the second transmission mode.

It should be understood that: that the digital channel of the terminal is not shared in the first transmission mode or the second transmission mode may also be understood as any one of the foregoing.

For how to determine that the digital channel of the terminal is shared in the first transmission mode or the second transmission mode, refer to the foregoing related descriptions. In addition, for understanding that the digital channel of the terminal is shared in the first transmission mode or the second transmission mode, refer to the foregoing related descriptions. Details are not described herein again.

In the method embodiments of this application, a case in which the number of antenna ports used by each antenna panel in the first transmission mode or the second transmission mode is the same is mainly described. However, this application does not exclude a case in which numbers of antenna ports used by at least two antenna panels in the first transmission mode or the second transmission mode are different. A person skilled in the art can implement, according to the method described above, uplink transmission in a scenario in which the numbers of antenna ports used by at least two antenna panels in the first transmission mode or the second transmission mode are different.

In addition, in the method described in this application, an example in which the antenna port corresponding to each panel is the ports {0, 1. 2. 3} is basically used to describe related solutions. Actually, indexes of the antenna ports corresponding to the panels may be the same or different. For example, the antenna port corresponding to the antenna panel 1 is the ports {0, 1. 2. 3}, and the antenna port corresponding to the antenna panel 2 is the ports {4, 5, 6, 7}. In the method described in this application, values of X and Y are not limited either. For example, X may be 4, or may be 2 or another value, and Y may be 2, or may be 1 or another value.

The foregoing describes the method embodiments provided in this application, and the following describes apparatus embodiments provided in this application. It should be understood that descriptions of the apparatus embodiments correspond to the descriptions of the method embodiments. Therefore, for content not described in detail, refer to the foregoing method embodiments. For brevity, details are not described herein again.

FIG. 15 is a schematic block diagram of a communication apparatus according to an embodiment of this application. As shown in FIG. 15, the communication apparatus 2000 may include a communication unit 2100, and may further include a processing unit 2200. The communication unit 2100 may implement a corresponding communication function. The communication may be internal communication of the communication apparatus 2000, or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a possible design, the communication apparatus 2000 may be the terminal in the method 500, the method 600, the method 700, the method 800, or the method 900, or may be a module or a chip used in the terminal. The communication apparatus 2000 may be configured to perform the steps or procedures performed by the terminal in the foregoing manner embodiments.

Specifically, the communication unit 2100 is configured to: receive first information from a network device, and send data to the network device based on the first information, where the first information indicates a transmission mode, k precoding matrices, and k numbers of streams in one-to-one correspondence with the k precoding matrices, and k≥2. The transmission mode is a first transmission mode or a second transmission mode. The k precoding matrices and the k numbers of streams are in one-to-one correspondence with k first antenna port sets used in the transmission mode. The first antenna port set is a part of a second antenna port set used by the communication apparatus 2000 in a third transmission mode. In the first transmission mode, one transport block is simultaneously sent based on the k precoding matrices and the k numbers of streams, and different precoding matrices and numbers of streams correspond to different parts of the one transport block. In the second transmission mode, one transport block is simultaneously sent based on the k precoding matrices and the k numbers of streams, and different precoding matrices and numbers of streams correspond to a same part of the one transport block. In the third transmission mode, one transport block is sent based on one precoding matrix and one number of streams.

Optionally, the processing unit 2200 is configured to determine the k precoding matrices and the k numbers of streams based on a number of antenna ports included in the first antenna port set and the first information.

Optionally, the communication unit 2100 is further configured to send second information to the network device, where the second information indicates one or more of the following: a number of antenna ports that the communication apparatus 2000 is capable of using in the first transmission mode or the second transmission mode, an antenna port set that the communication apparatus 2000 is capable of using in the first transmission mode or the second transmission mode, a type of a precoding matrix supported by the communication apparatus 2000 in the first transmission mode or the second transmission mode, sharing of a digital channel of the communication apparatus 2000 in the first transmission mode or the second transmission mode, a maximum number of streams that the communication apparatus 2000 is capable of transmitting in the first transmission mode or the second transmission mode, a number of antenna ports used by the communication apparatus 2000 in the third transmission mode, or a maximum number of streams that the communication apparatus 2000 is capable of transmitting in the third transmission mode. The number of antenna ports that the communication apparatus 2000 is capable of using in the first transmission mode or the second transmission mode is greater than or equal to the number of antenna ports included in the first antenna port set. The type of the precoding matrix is non-coherent or partial coherent.

Optionally, the first information further indicates the k first antenna port sets.

Optionally, an SRS resource set indicator field in the first information indicates the k first antenna port sets.

Optionally, the communication unit 2100 is further configured to receive third information from the network device, where the third information indicates k SRS resource sets, the SRS resource set includes a first SRS resource, and the first SRS resource is associated with the first antenna port set.

Optionally, the second information indicates the type of the precoding matrix supported by the communication apparatus 2000 in the first transmission mode or the second transmission mode. A number of rows of each of the k precoding matrices is equal to the number of antenna ports used by the communication apparatus 2000 in the third transmission mode. A number of rows of non-zero elements in each precoding matrix is equal to the number of antenna ports included in the first antenna port set.

Optionally, $Y=X/k$, where Y is the number of antenna ports that the communication apparatus 2000 is capable of using in the first transmission mode or the second transmission mode, and X is the number of antenna ports used by the communication apparatus 2000 in the third transmission mode.

In another possible design, the communication apparatus 2000 may be the network device in the method 500, the method 600, the method 700, the method 800, or the method 900, or may be a module or a chip used in the network device. The communication apparatus 2000 may be configured to perform the steps or procedures performed by the network device in the foregoing manner embodiments.

Specifically, the processing unit 2200 is configured to determine k precoding matrices and k numbers of streams in one-to-one correspondence with the k precoding matrices, where $k \geq 2$. The k precoding matrices and the k numbers of streams are in one-to-one correspondence with k first antenna port sets used in a first transmission mode or a second transmission mode. The first antenna port set is a part of a second antenna port set used by a terminal in a third transmission mode. In the first transmission mode, one transport block is simultaneously sent based on the k precoding matrices and the k numbers of streams, and different precoding matrices and numbers of streams correspond to different parts of the one transport block. In the second transmission mode, one transport block is simultaneously sent based on the k precoding matrices and the k numbers of streams, and different precoding matrices and numbers of streams correspond to a same part of the one transport block. In the third transmission mode, one transport block is sent based on one precoding matrix and one number of streams. The communication unit 2100 is configured to send first information to the terminal, where the first information indicates a transmission mode, the k precoding matrices, and the k numbers of streams, and the transmission mode is the first transmission mode or the second transmission mode.

Optionally, the communication unit 2100 is further configured to receive second information from the terminal, where the second information indicates one or more of the following: a number of antenna ports that the terminal is capable of using in the first transmission mode or the second transmission mode, an antenna port set that the terminal is capable of using in the first transmission mode or the second transmission mode, a type of a precoding matrix supported by the terminal in the first transmission mode or the second transmission mode, sharing of a digital channel of the terminal in the first transmission mode or the second transmission mode, a maximum number of streams that the terminal is capable of transmitting in the first transmission mode or the second transmission mode, a number of antenna ports used by the terminal in the third transmission mode, or a maximum number of streams that the terminal is capable of transmitting in the third transmission mode. The number of antenna ports that the terminal is capable of using in the first transmission mode or the second transmission mode is greater than or equal to the number of antenna ports included in the first antenna port set. The type of the precoding matrix is non-coherent or partial coherent.

Optionally, the processing unit 2200 is further configured to determine, based on the second information, one or more of the following: sharing of the digital channel of the terminal in the first transmission mode or the second transmission mode, the k first antenna port sets, the number of antenna ports that the terminal is capable of using in the first transmission mode or the second transmission mode, or the type of the precoding matrix supported by the terminal in the first transmission mode or the second transmission mode.

Optionally, the first information further indicates the k first antenna port sets.

Optionally, an SRS resource set indicator field in the first information indicates the k first antenna port sets.

Optionally, the communication unit 2100 is further configured to send third information to the terminal, where the third information indicates k SRS resource sets, the SRS resource set includes a first SRS resource, and the first SRS resource is associated with the first antenna port set.

For details about steps or procedures performed by each unit in the communication apparatus 2000, refer to the foregoing method embodiments. The details are not described herein again.

It should be understood that the communication apparatus 2000 may further perform the operations performed by the terminal or the network device in the method 1000. For details about steps or procedures performed by each in the communication apparatus 2000, refer to the method 1000. The details are not described herein again.

It should be understood that the "unit" in the communication apparatus 2000 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 2100 may alternatively be a transceiver or a transceiver circuit (which, for example, may include a receiver circuit and a transmitter circuit), and the processing unit 2200 may alternatively be a processor or a processing circuit.

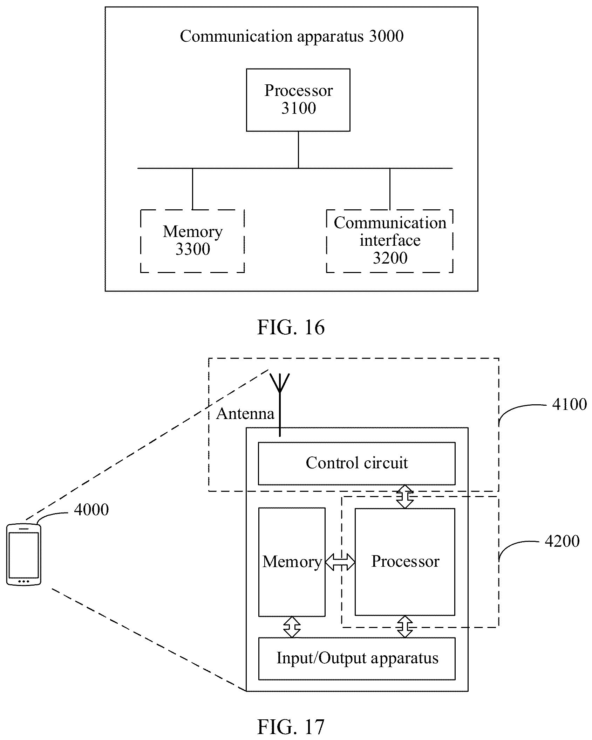

FIG. 16 is a schematic block diagram of another communication apparatus 3000 according to an embodiment of this application. The apparatus 3000 may be a terminal or a network device, or may be a chip, a chip system, a processor, or the like that supports a terminal or a network device in implementing the foregoing method. The apparatus may be configured to implement the method described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like, for example, may be a baseband processor or a central processing unit. The baseband processor may be configured to process a communication protocol and communication data. The central processing unit may be configured to control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, so that the apparatus 3000 performs the methods described in the foregoing method embodiments.

In another optional design, the apparatus 3000 may include a communication interface 3200 configured to implement a receiving function and a sending function. For example, the communication interface 3200 may be a transceiver circuit, an interface, an interface circuit, or a transceiver. The transceiver circuit, the interface, the interface circuit, or the transceiver configured to implement the receiving function and the sending function may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300 that may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be disposed separately, or may be integrated together.

FIG. 17 is a diagram of a structure of a terminal 4000 according to this application. The communication apparatus 2000 or the communication apparatus 3000 may be configured in the terminal 4000. Alternatively, the communication apparatus 2000 or the communication apparatus 3000 may be the terminal 4000. In other words, the terminal 4000 may perform the actions performed by the terminal in the foregoing method embodiments. Optionally, for ease of description, FIG. 17 shows only main components of the terminal. As shown in FIG. 17, the terminal 4000 includes a processor, a memory, a control circuit, an antenna, and an input/output apparatus.

The processor is mainly configured to: process a communication protocol and communication data, control the entire terminal, execute a software program, and process data of the software program, for example, is configured to support the terminal in performing the actions described in the foregoing method embodiments. The memory is mainly configured to store the software program and the data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program from the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal, the radio frequency circuit receives a radio frequency signal via the antenna, converts the radio frequency signal into a baseband signal, and outputs the baseband signal to the processor. The processor converts the baseband signal into data, and processes the data.

A person skilled in the art may understand that for ease of description, FIG. 17 shows only one memory and one processor. In an actual terminal, there may be a plurality of processors and memories. The memory may also be referred to as a storage medium, a storage device, or the like. This is not limited in this embodiment of this application.

For example, the processor may include a baseband processor and a central processing unit. The baseband processor is mainly configured to process the communication protocol and the communication data. The central processing unit is mainly configured to: control the entire terminal, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a receiving function and a sending function may be considered as a transceiver unit 4100 of the terminal 4000, and the processor that has a processing function may be considered as a processing unit 4200 of the terminal 4000. As shown in FIG. 17, the terminal 4000 includes the transceiver unit 4100 and the processing unit 4200. The transceiver unit may also be referred to as a transceiver, a transceiver machine, a transceiver apparatus, or the like. Optionally, a component configured to implement the receiving function in the transceiver unit 4100 may be considered as a receiving unit, and a component configured to implement the sending function in the transceiver unit 4100 may be considered as a sending unit. That is, the transceiver unit 4100 includes the receiving unit and the sending unit. For example, the receiving unit may also be referred to as a receiver, a receive machine, or a receiver circuit, and the sending unit may also be referred to as a transmitter, a transmit machine, or a transmitter circuit.

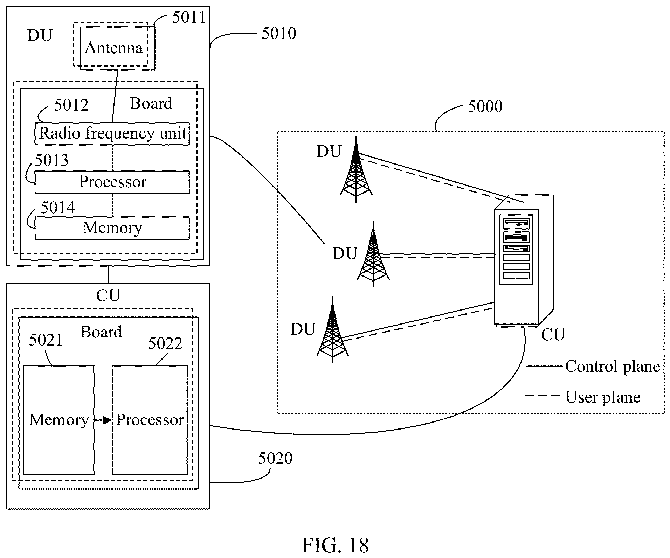

FIG. 18 is a diagram of a structure of a network device 5000 according to an embodiment of this application. The communication apparatus 2000 or the communication apparatus 3000 may be configured in the network device 5000. Alternatively, the communication apparatus 2000 or the communication apparatus 3000 may be the network device 5000. Alternatively, the network device 5000 may perform the actions performed by the network device in the foregoing method embodiments (for example, when the foregoing method is applied to an uplink scenario, the second communication apparatus is the network device).

As shown in FIG. 18, the network device 5000 may include one or more DUs 5010 and one or more CUs 5020. The CU 5020 may communicate with an NG core (next generation core network, NC). The DU 5010 may include at least one antenna 5011, at least one radio frequency unit 5012, at least one processor 5013, and at least one memory 5014. The DU 5010 is mainly configured to: receive and send a radio frequency signal, convert a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to: perform baseband processing, control the network device 5000, and the like. The DU 5010 and the CU 5020 may be physically disposed together, or may be physically separated, namely, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to a first device or a second device in the foregoing method embodiments.

Specifically, baseband processing of the CU and the DU may be divided based on a protocol layer of a wireless network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the network device 5000 may include one or more radio units (RUs), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may separately support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may be further disposed on each board. The DU 5010 may include one or more boards. A plurality of boards may jointly support a radio access network (for example, a 5G network) of a single access standard, or may separately support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may be further disposed on each board.

It should be understood that the network device 5000 shown in FIG. 18 can implement processes related to the actions performed by the network device in the foregoing method embodiments. Operations and/or functions of modules in the network device 5000 are respectively for implementing corresponding procedures in the foregoing method embodiments. For details, refer to the descriptions in the foregoing method embodiments. To avoid repetition, detailed descriptions are properly omitted herein.

It should be understood that the network device 5000 shown in FIG. 18 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

It should be understood that, in a possible design, steps in the method embodiments provided in this application may be completed by using a hardware integrated logic circuit in a processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform the steps or procedures performed by the terminal or the network device in any one of the foregoing method embodiments.

This application further provides a computer-readable storage medium. The computer-readable storage medium stores program code. When the program code is run on a computer, the computer is enabled to perform the steps or procedures performed by the terminal or the network device in any one of the foregoing method embodiments.

This application further provides a communication apparatus, including a processor and an interface. The interface is configured to send and/or receive a signal, so that the processor performs the steps or procedures performed by the terminal or the network device in any one of the foregoing method embodiments.

This application further provides a communication system, including at least one of a terminal and a network device.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining another term that can implement same or similar functions in an existing or future protocol.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the apparatus embodiment described above is merely an example. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or a part of the functions of the function units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first information from a network device, wherein the first information indicates a transmission mode, k precoding matrices, and k numbers of streams in one-to-one correspondence with the k precoding matrices, $k \geq 2$, the transmission mode is a first transmission mode or a second transmission mode, the k precoding matrices and the k numbers of streams are in one-to-one correspondence with k first antenna port sets used in the transmission mode, and the first antenna port set is a part of a second antenna port set used by a terminal in a third transmission mode; in the first transmission mode, one transport block is simultaneously sent based on the k precoding matrices and the k numbers of streams, and different precoding matrices and numbers of streams correspond to different parts of the one transport block; in the second transmission mode, one transport block is simultaneously sent based on the k precoding matrices and the k numbers of streams, and different precoding matrices and numbers of streams correspond to a same part of the one transport block; and in the third transmission mode, one transport block is sent based on one precoding matrix and one number of streams; and
   sending data to the network device based on the first information.

2. The method according to claim 1, wherein before the sending the data to the network device based on the first information, the method further comprises:
   determining the k precoding matrices and the k numbers of streams based on a number of antenna ports comprised in the first antenna port set and the first information.

3. The method according to claim 1 or 2, wherein before the receiving the first information from the network device, the method further comprises:
   sending second information to the network device, wherein the second information indicates one or more of the following:

   a number of antenna ports that the terminal is capable of using in the first transmission mode or the second transmission mode, an antenna port set that the terminal is capable of using in the first transmission mode or the second transmission mode, a type of a precoding matrix supported by the terminal in the first transmission mode or the second transmission mode, sharing of a digital channel of the terminal in the first transmission mode or the second transmission mode, a maximum number of streams that the terminal is capable of transmitting in the first transmission mode or the second transmission mode, a number of antenna ports used by the terminal in the third transmission mode, or a maximum number of streams that the terminal is capable of transmitting in the third transmission mode, wherein
   the number of antenna ports that the terminal is capable of using in the first transmission mode or the second transmission mode is greater than or equal to the number of antenna ports comprised in the first antenna port set, and the type of the precoding matrix is non-coherent or partial coherent.

4. The method according to any one of claims 1 to 3, wherein the first information further indicates the k first antenna port sets.

5. The method according to claim 4, wherein an SRS resource set indicator field in the first information indicates the k first antenna port sets.

6. The method according to any one of claims 1 to 3, wherein before the sending the data to the network device based on the first information, the method further comprises:
   receiving third information from the network device, wherein the third information indicates k SRS resource sets, the SRS resource set comprises a first SRS resource, and the first SRS resource is associated with the first antenna port set.

7.  The method according to claim 3, wherein the second information indicates the type of the precoding matrix supported by the terminal in the first transmission mode or the second transmission mode; and
a number of rows of each of the k precoding matrices is equal to the number of antenna ports used by the terminal in the third transmission mode, and a number of rows of non-zero elements in each precoding matrix is equal to the number of antenna ports comprised in the first antenna port set.

8.  The method according to any one of claims 1 to 7, wherein Y=X/k, wherein Y is the number of antenna ports that the terminal is capable of using in the first transmission mode or the second transmission mode, and X is the number of antenna ports used by the terminal in the third transmission mode.

9.  A communication method, comprising:

    determining k precoding matrices and k numbers of streams in one-to-one correspondence with the k precoding matrices, wherein k≥2, the k precoding matrices and the k numbers of streams are in one-to-one correspondence with k first antenna port sets used in a first transmission mode or a second transmission mode, and the first antenna port set is a part of a second antenna port set used by a terminal in a third transmission mode; in the first transmission mode, one transport block is simultaneously sent based on the k precoding matrices and the k numbers of streams, and different precoding matrices and numbers of streams correspond to different parts of the one transport block; in the second transmission mode, one transport block is simultaneously sent based on the k precoding matrices and the k numbers of streams, and different precoding matrices and numbers of streams correspond to a same part of the one transport block; and in the third transmission mode, one transport block is sent based on one precoding matrix and one number of streams; and
    sending first information to the terminal, wherein the first information indicates a transmission mode, the k precoding matrices, and the k numbers of streams, and the transmission mode is the first transmission mode or the second transmission mode.

10. The method according to claim 9, wherein before the determining the k precoding matrices and the k numbers of streams in one-to-one correspondence with the k precoding matrices, the method further comprises:
    receiving second information from the terminal, wherein the second information indicates one or more of the following:

    a number of antenna ports that the terminal is capable of using in the first transmission mode or the second transmission mode, an antenna port set that the terminal is capable of using in the first transmission mode or the second transmission mode, a type of a precoding matrix supported by the terminal in the first transmission mode or the second transmission mode, sharing of a digital channel of the terminal in the first transmission mode or the second transmission mode, a maximum number of streams that the terminal is capable of transmitting in the first transmission mode or the second transmission mode, a number of antenna ports used by the terminal in the third transmission mode, or a maximum number of streams that the terminal is capable of transmitting in the third transmission mode, wherein
    the number of antenna ports that the terminal is capable of using in the first transmission mode or the second transmission mode is greater than or equal to a number of antenna ports comprised in the first antenna port set, and the type of the precoding matrix is non-coherent or partial coherent.

11. The method according to claim 10, wherein before the determining the k precoding matrices and the k numbers of streams in one-to-one correspondence with the k precoding matrices, the method further comprises:
    determining, based on the second information, one or more of the following: sharing of the digital channel of the terminal in the first transmission mode or the second transmission mode, the k first antenna port sets, the number of antenna ports that the terminal is capable of using in the first transmission mode or the second transmission mode, or the type of the precoding matrix supported by the terminal in the first transmission mode or the second transmission mode.

12. The method according to any one of claims 9 to 11, wherein the first information further indicates the k first antenna port sets.

13. The method according to claim 12, wherein an SRS resource set indicator field in the first information indicates the k first antenna port sets.

14. The method according to any one of claims 9 to 11, wherein before the determining the k precoding matrices and the k numbers of streams in one-to-one correspondence with the k precoding matrices, the method further comprises: sending third information to the terminal, wherein the third information indicates k SRS resource sets, the SRS resource set comprises a first SRS resource, and the first SRS resource is associated with the first antenna port set.

15. The method according to any one of claims 9 to 14, wherein a number of rows of each of the k precoding matrices is equal to the number of antenna ports comprised in the first antenna port set.

16. The method according to claim 10, wherein the second information indicates the type of the precoding matrix supported by the terminal in the first transmission mode or the second transmission mode; and
a number of rows of each of the k precoding matrices is equal to the number of antenna ports used by the terminal in the third transmission mode, and a number of rows of non-zero elements in each precoding matrix is equal to the number of antenna ports comprised in the first antenna port set.

17. A communication apparatus, comprising a unit configured to perform each step of the method according to any one of claims 1 to 8 or a unit configured to perform each step of the method according to any one of claims 9 to 16.

18. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8 or the method according to any one of claims 9 to 16.

19. A communication apparatus, comprising a processor and an interface, wherein the interface is configured to send and/or receive a signal, so that the processor performs the method according to any one of claims 1 to 8 or the method according to any one of claims 9 to 16.

20. A readable storage medium, wherein the readable storage medium stores a computer program or instructions, and when the computer program or the instructions are executed, the computer is enabled to perform the method according to any one of claims 1 to 8 or the method according to any one of claims 9 to 16.

21. A computer program product, comprising computer program instructions, wherein the computer program instructions enable the computer to perform the method according to any one of claims 1 to 8 or the method according to any one of claims 9 to 16.

(a)                                                            (b)

FIG. 1

FIG. 2

FIG. 3

FIG. 4

500

```
┌─────────────────────────┐                    ┌─────────────────────────┐
│        Terminal         │                    │      Network device     │
└─────────────────────────┘                    └─────────────────────────┘
```

S510: Second information

S520: Determine, based on the second information, that a digital channel of the terminal is shared in a first transmission mode or a second transmission mode

S530: Third information

S540: Determine k first antenna port sets

S550: Determine k precoding matrices and k numbers of streams in one-to-one correspondence with the k precoding matrices

S560: First information

S570: Send data in the first transmission mode or the second transmission mode based on the first information

FIG. 5

600

| Terminal | | Network device |
|----------|--|----------------|

S610: Information #1
(including antenna ports associated with
antenna panels in a first transmission mode
or a second transmission mode)

S620: Information #2 (configuring SRS resources)

S630: Send an SRS based on the information #2

S640: Perform channel
estimation based on the SRS, and
determine two precoding
matrices and numbers of streams
respectively corresponding to the
two precoding matrices

S650: DCI (indicating a transmission mode, the
two precoding matrices, and the numbers of
streams respectively corresponding to the two
precoding matrices)

S660: Determine, based on the DCI,
the transmission mode, the two
precoding matrices, and the numbers of
streams respectively corresponding to
the two precoding matrices

S670: Send a PUSCH in the first transmission
mode or the second transmission mode

FIG. 6

700

| Terminal | | Network device |
|---|---|---|

S710: Information #1 (indicating that Y=2)

S720: Information #2 (configuring SRS resources)

S730: Send an SRS based on the information #2

S740: Determine antenna ports used by an antenna panel 1 and an antenna panel 2 in a first transmission mode or a second transmission mode, two precoding matrices, and numbers of streams respectively corresponding to the two precoding matrices

S750: DCI (indicating a transmission mode, the two precoding matrices, and the numbers of streams respectively corresponding to the two precoding matrices)

S760: Determine, based on the DCI, the transmission mode, the two precoding matrices, and the numbers of streams respectively corresponding to the two precoding matrices

S770: Send a PUSCH in the first transmission mode or the second transmission mode

FIG. 7

800

| Terminal | | Network device |

S810: Information #1

S820: Information #2 (configuring SRS resources)

S830: Send an SRS based on the information #2

S840: Perform channel estimation based on the SRS, and determine two precoding matrices and numbers of streams respectively corresponding to the two precoding matrices

S850: DCI (indicating a transmission mode, the two precoding matrices, and the numbers of streams respectively corresponding to the two precoding matrices)

S860: Determine, based on the DCI, the transmission mode, the two precoding matrices, and the numbers of streams respectively corresponding to the two precoding matrices

S870: Send a PUSCH in a first transmission mode or a second transmission mode

FIG. 8

900

| Terminal | | Network device |

S910: Information #1 (indicating that Y=2)

S920: Information #2 (configuring two
SRS resource sets)

S930: Send an SRS based on the information #2

S940: Perform channel estimation
based on the SRS, and determine two
precoding matrices and numbers of
streams respectively corresponding to
the two precoding matrices

S950: DCI (indicating a transmission mode,
the two precoding matrices, and the numbers of
streams respectively corresponding to the two
precoding matrices)

S960: Determine, based on the DCI,
the transmission mode, the two
precoding matrices, and the numbers
of streams respectively corresponding
to the two precoding matrices

S970: Send a PUSCH in a first transmission
mode or a second transmission mode

FIG. 9

1000

| Terminal | | Network device |

S1010: Determine a transmission
mode

S1020: First information (indicating the
transmission mode, a precoding matrix, and a
number of streams)

S1030: Determine the transmission
mode, the precoding matrix, and the
number of streams based on the first
information

S1040: Send data

FIG. 10

First information

| ... | Indicate a first transmission mode/second transmission mode | TPMI 1 | TPMI 2 | ... | TPMI k | ... |
|---|---|---|---|---|---|---|
| | | $L_1$ | $L_2$ | | $L_k$ | |

| ... | Indicate a third transmission mode | TPMI_sTRP | | Zero-padded or reserved | ... |
|---|---|---|---|---|---|
| | | L | | $(L_1+L_2+...+L_k)-L$ | |

(a)

| ... | Indicate a first transmission mode/second transmission mode | TPMI 1 | TPMI 2 | ... | TPMI k | ... |
|---|---|---|---|---|---|---|
| | | $L_1$ | $L_2$ | | $L_k$ | |

| ... | Indicate a third transmission mode | TPMI_sTRP | ... |
|---|---|---|---|
| | | L | |

(b)

| ... | Indicate a first transmission mode/second transmission mode | TPMI 1 | TPMI 2 | ... | TPMI k | Zero-padded or reserved | ... |
|---|---|---|---|---|---|---|---|
| | | $L_1$ | $L_2$ | | $L_k$ | $L-(L_1+L_2+...+L_k)$ | |

| ... | Indicate a third transmission mode | TPMI_sTRP | ... |
|---|---|---|---|
| | | L | |

(c)

FIG. 11

First information

| ... | Indicate a first transmission mode/second transmission mode | TPMI 1 | TPMI 2 | ... | TPMI k | ... |
|---|---|---|---|---|---|---|
| | | $L_1$ | $L_2$ | | $L_k$ | |

| ... | Indicate a third transmission mode | Zero-padded or reserved | TPMI_sTRP | ... |
|---|---|---|---|---|
| | | $(L_1+L_2+...+L_k)-L$ | L | |

(a)

| ... | Indicate a first transmission mode/second transmission mode | TPMI 1 | TPMI 2 | ... | TPMI k | ... |
|---|---|---|---|---|---|---|
| | | $L_1$ | $L_2$ | | $L_k$ | |

| ... | Indicate a third transmission mode | TPMI_sTRP | ... |
|---|---|---|---|
| | | L | |

(b)

| ... | Indicate a first transmission mode/second transmission mode | Zero-padded or reserved | TPMI 1 | TPMI 2 | ... | TPMI k | ... |
|---|---|---|---|---|---|---|---|
| | | $L-(L_1+L_2+...+L_k)$ | $L_1$ | $L_2$ | | $L_k$ | |

| ... | Indicate a third transmission mode | TPMI_sTRP | ... |
|---|---|---|---|
| | | L | |

(c)

FIG. 12

| ... | Indicate a first transmission mode/second transmission mode | L | N | ... |
|-----|-----|-----|-----|-----|
| | | TPMI 1 | TPMI 2 | |

| | | L | N | |
|-----|-----|-----|-----|-----|
| ... | Indicate a third transmission mode | TPMI_sTRP | Zero-padded or reserved | ... |

First information

FIG. 13

| ... | Indicate a first transmission mode/second transmission mode | L | L | ... |
|-----|-----|-----|-----|-----|
| | | TPMI 1 | TPMI 2 | |

| | | L | L | |
|-----|-----|-----|-----|-----|
| ... | Indicate a third transmission mode | TPMI_sTRP | Zero-padded or reserved | ... |

First information

FIG. 14

Communication apparatus 2000

Communication unit 2100

Processing unit 2200

FIG. 15

FIG. 18

## INTERNATIONAL SEARCH REPORT

| International application No. |
| --- |
| **PCT/CN2024/085952** |

| A. | CLASSIFICATION OF SUBJECT MATTER |
| --- | --- |

H04B 7/06(2006.01)i

According to International Patent Classification (IPC) or to both national classification and IPC

| B. | FIELDS SEARCHED |
| --- | --- |

Minimum documentation searched (classification system followed by classification symbols)

IPC：H04B

Documentation searched other than minimum documentation to the extent that such documents are included in the fields searched

Electronic data base consulted during the international search (name of data base and, where practicable, search terms used)

CNABS: CNTXT; VEN; EPTXT; USTXT; WOTXT; CNKI; 3GPP: 终端, 网络设备, 基站, 指示, 传输, 模式, 方式, 方案, 预编码, 矩阵, 流数, 层数, 秩, 传输块, 相同, 不同, 空分复用, 单频网, SDM, SFN, sTRP, single, transmission receiving point, base station, terminal, eNB, indicate, transmission, mode, precode, matrix, rank, layer, transport, block, TB, same

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115441913 A (HUAWEI TECHNOLOGIES CO., LTD.) 06 December 2022 (2022-12-06) description, paragraphs [0109]-[0308] | 1-21 |
| A | CN 101938336 A (ZTE CORP.) 05 January 2011 (2011-01-05) entire document | 1-21 |
| A | CN 114731174 A (HUAWEI TECHNOLOGIES CO., LTD.) 08 July 2022 (2022-07-08) entire document | 1-21 |
| A | CN 112583523 A (DATANG MOBILE COMMUNICATIONS EQUIPMENT CO., LTD.) 30 March 2021 (2021-03-30) entire document | 1-21 |
| A | WO 2023278148 A1 (QUALCOMM INC.) 05 January 2023 (2023-01-05) entire document | 1-21 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 June 2024** | **02 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085952**

| Patent document cited in search report | | | Publication date (day/month/year) | Patent family member(s) | | | Publication date (day/month/year) |
|---|---|---|---|---|---|---|---|
| CN | 115441913 | A | 06 December 2022 | None | | | |
| CN | 101938336 | A | 05 January 2011 | CN | 101938336 | B | 11 May 2016 |
| CN | 114731174 | A | 08 July 2022 | None | | | |
| CN | 112583523 | A | 30 March 2021 | None | | | |
| WO | 2023278148 | A1 | 05 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310388735